# EUROPEAN PATENT SPECIFICATION

(11) **EP 3 556 100 B1**
(45) Date of publication and mention of the grant of the patent: **18.01.2023**
(21) Application number: 17829488.0
(22) Date of filing: 19.12.2017
(51) Int. Cl.: H04N 19/597, H04N 19/46

(54) **PREFERRED RENDERING OF SIGNALLED REGIONS-OF-INTEREST OR VIEWPORTS IN VIRTUAL REALITY VIDEO**
BEVORZUGTE DARSTELLUNG VON SIGNALISIERTEN REGIONEN VON INTERESSE ODER ANSICHTSFENSTERN IN EINEM VIDEO DER VIRTUELLEN REALITÄT
RENDU PRÉFÉRÉ DE RÉGIONS D'INTÉRÊT OU DE FENÊTRES D'AFFICHAGE SIGNALÉES DANS UNE VIDÉO DE RÉALITÉ VIRTUELLE

(30) Priority: 19.12.2016 US 201662436245 P; 18.12.2017 US 201715845862
(43) Date of publication of application: 23.10.2019
(73) Proprietor: Qualcomm Incorporated, San Diego, CA 92121-1714 (US)
(72) Inventor: WANG, Ye-Kui, San Diego California 92121-1714 (US); VAN DER AUWERA, Geert, San Diego California 92121-1714 (US)
(74) Representative: Howe, Steven
(86) International application number: PCT/US2017/067389
(87) International publication number: WO 2018/118972

(56) References cited:
- US-A1- 2011 181 693
- US-A1- 2016 057 494
- US-A1- 2016 337 706
- Y-K WANG (QUALCOMM): "[OMAF] On recommended viewport signalling", 119. MPEG MEETING; 17-7-2017 - 21-7-2017; TORINO; (MOTION PICTURE EXPERT GROUP OR ISO/IEC JTC1/SC29/WG11),, no. m40922, 10 July 2017 (2017-07-10), XP030069266,
- Y-K WANG (QUALCOMM): "Preferred rendering operation for a recommended viewport", 29. JCT-VC MEETING; 23-10-2017 - 27-10-2017; MACAU; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-AC0035, 11 October 2017 (2017-10-11), XP030118312,

## Description

### TECHNICAL FIELD

This disclosure relates to the processing and transmission of virtual reality (VR) video, such as 360-degree video.

### BACKGROUND

Digital video capabilities can be incorporated into a wide range of devices, including digital televisions, digital direct broadcast systems, wireless broadcast systems, personal digital assistants (PDAs), laptop or desktop computers, tablet computers, e-book readers, digital cameras, digital recording devices, digital media players, video gaming devices, video game consoles, cellular or satellite radio telephones, so-called "smart phones," video teleconferencing devices, video streaming devices, and the like. Digital video devices implement video coding techniques, such as those described in the standards defined by MPEG-2, MPEG-4, ITU-T H.263, ITU-T H.264/MPEG-4, Part 10, Advanced Video Coding (AVC), ITU-T H.265, also referred to as High Efficiency Video Coding (HEVC), and extensions of such standards. The video devices may transmit, receive, encode, decode, and/or store digital video information more efficiently by implementing such video coding techniques.

Video coding techniques include spatial (intra-picture) prediction and/or temporal (inter-picture) prediction to reduce or remove redundancy inherent in video sequences. For block-based video coding, a video slice (e.g., a video frame or a portion of a video frame) may be partitioned into video blocks, which for some techniques may also be referred to as treeblocks, coding units (CUs) and/or coding nodes. Video blocks in an intra-coded (I) slice of a picture are encoded using spatial prediction with respect to reference samples in neighboring blocks in the same picture. Video blocks in an inter-coded (P or B) slice of a picture may use spatial prediction with respect to reference samples in neighboring blocks in the same picture or temporal prediction with respect to reference samples in other reference pictures. Pictures may be referred to as frames, and reference pictures may be referred to a reference frames.

Spatial or temporal prediction results in a predictive block for a block to be coded. Residual data represents pixel differences between the original block to be coded and the predictive block. An inter-coded block is encoded according to a motion vector that points to a block of reference samples forming the predictive block, and the residual data indicating the difference between the coded block and the predictive block. An intra-coded block is encoded according to an intra-coding mode and the residual data. For further compression, the residual data may be transformed from the pixel domain to a transform domain, resulting in residual transform coefficients, which then may be quantized. The quantized transform coefficients, initially arranged in a two-dimensional array, may be scanned in order to produce a one-dimensional vector of transform coefficients, and entropy coding may be applied to achieve even more compression.

More recently, techniques for coding and transmitting 360-degree video (e.g., for VR applications) have been developed. As a result of recent developments in VR video technology, the video environment experienced by the user has become just as important as the subject of the videos themselves. Such VR video technology may use 360-degree video technology that involves real-time streaming of 360-degree video graphics and/or real-time streaming of 360-degree video from a 360-degree video camera or website to a real-time video display, such as a VR head-mount display (HMD). A VR HMD allows the user to experience action happening all around them by changing a viewing angle with a turn of the head. In order to create a 360-degree video, a special set of cameras may be used to record all 360-degrees of a scene simultaneously, or multiple views (e.g., video and/or computer-generated images) may be stitched together to form the image.

After video data has been encoded, the video data may be packetized for transmission or storage. The video data may be assembled into a video file conforming to any of a variety of standards, such as the International Organization for Standardization (ISO) base media file format and extensions thereof, such as the AVC file format. US 2016/057494 A1 discloses a signal transmitting and receiving device and a method of controlling the signal transmitting and receiving device. The method of controlling the signal transmitting and receiving device includes de-multiplexing a stream including video data and signaling information, decoding de-multiplexed signaling information and video data, and extracting information on a crop region from decoded signaling information. The signal transmitting and receiving device includes a de-multiplexing unit de-multiplexing a stream including video data and signaling information, a signaling information decoding unit decoding de-multiplexed signaling information, a video decoder decoding video data in a de-multiplexed video stream, a control unit extracting information on a crop region from decoded signaling information, and a display unit.

### SUMMARY

The invention is defined in the appended claims to which reference should now be made. In general, this disclosure describes techniques related to coding (e.g., encoding or decoding) of regions-of-interest or viewports in virtual reality (VR) video. In some examples, this disclosure describes techniques for the signaling of preferred or prioritized rendering operations for preferred regions-of-interest (ROIs) or preferred viewports in virtual reality video (e.g., 360-degree video). Such preferred rendering operations may be used in situations where preferred ROIs or viewports (e.g., in a director's cut of 3D video) are adjusted to fit the size and/or aspect ratio of a user's display.

In one example of the disclosure, a method of processing video data comprises receiving 360-degree video data, receiving one or more first syntax elements indicating preferred regions-of-interest or preferred viewports of the 360-degree video data, receiving one or more second syntax elements that indicate a preferred rendering operation for rendering the preferred regions-of-interest or preferred viewports, and rendering the 360-degree video data based on the preferred rendering operations.

In another example of the disclosure, an apparatus configured to process video data comprises a memory configured to store 360-degree video data, and one or more processors in communication with the memory, the apparatus configured to receive 360-degree video data, receive one or more first syntax elements indicating preferred regions-of-interest or preferred viewports of the 360-degree video data, receive one or more second syntax elements that indicate a preferred rendering operation for rendering the preferred regions-of-interest or preferred viewports, and render the 360-degree video data based on the preferred rendering operations.

In another example, this disclosure describes a non-transitory computer-readable storage medium storing instructions that, when executed, causes one or more processors of a device configured to process video data to receive 360-degree video data, receive one or more first syntax elements indicating preferred regions-of-interest or preferred viewports of the 360-degree video data, receive one or more second syntax elements that indicate a preferred rendering operation for rendering the preferred regions-of-interest or preferred viewports, and render the 360-degree video data based on the preferred rendering operations.

In another example of the disclosure, a method of processing video data comprises encoding 360-degree video data, generating one or more first syntax elements indicating preferred regions-of-interest or preferred viewports of the 360-degree video data, generating one or more second syntax elements that indicate a preferred rendering operation for rendering the preferred regions-of-interest or preferred viewports, and signalling the one or more first syntax elements and the one or more second syntax elements with the encoded 360-degree video data.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating an example system that implements techniques for sending media data over a network.
FIG. 2 is a block diagram illustrating the system of FIG. 1 in more detail.
FIG. 3 is a block diagram illustrating an example of video encoder that may be configured to perform the techniques of this disclosure.
FIG. 4 is a block diagram illustrating an example of video decoder that may be configured to perform the techniques of this disclosure.
FIG. 5 is a flowchart illustrating an example method of the disclosure.
FIG. 6 is a flowchart illustrating another example method of the disclosure.

### DETAILED DESCRIPTION

This disclosure relates to virtual reality (VR) video. More specifically, this disclosure describes techniques for signalling of preferred regions-of-interest (ROIs) and/or viewports in VR video (also called most-interested regions). This disclosure also describes techniques signalling and receiving indications for the preferred rendering and/or decoding of signalled ROIs and/or viewports in VR video data. One or more techniques of this disclosure may include techniques for the creation of a set of one or more ROIs in VR video, techniques for signalling and reconstructing of information of ROIs, and techniques for the use of the information in encoding, streaming, playback, and management of VR video content.

In general, this disclosure describes techniques for generating a video content that includes data representative of one or more preferred regions-of-interest or preferred viewports of an image of video data (e.g., 360-degree VR video data). A director or producer may select the one or more most-interested regions or a computing device may derive the one or more most-interested regions from user statistics by a service or content provider, e.g., through the statistics of which regions have been requested/seen the most by users when the omnidirectional video content was provided through a streaming service. In any case, a client device may use the one or more most-interested regions to pre-fetch video data for the one or more most-interested regions to improve a playback of a video, such as, a virtual reality video, which is also referred to as 360-degree video. In some examples, this disclosure describes techniques for the signalling of preferred or prioritized rendering operations for preferred regions-of-interest (ROIs) or preferred viewports in virtual reality video (e.g., 360-degree video). Such preferred rendering operations may be used in situations where preferred ROIs or viewports (e.g., in a director's cut of 3D video) are adjusted to fit the size and/or aspect ratio of a user's display.

A client device may determine, for example, using information received in a header or message for transmitting video coding layer data of a bitstream, data representative (e.g., syntax elements) of the one or more most-interested regions and syntax elements indicating a preferred rendering operation for the most-interested regions of the VR video data. Upon determining the preferred rendering operation, a client device may render the indicated most-interested regions according to the preferred rendering operation. Such preferred rendering operations may be used in situations where preferred ROIs or viewports (e.g., in a director's cut of 3D video) are adjusted to fit the size and/or aspect ratio of a user's display.

The techniques of this disclosure may be applied to video files conforming to video data encapsulated according to any of ISO base media file format (ISOBMFF), extensions to ISOBMFF, Scalable Video Coding (SVC) file format, Advanced Video Coding (AVC) file format, High Efficiency Video Coding (HEVC) file format, Third Generation Partnership Project (3GPP) file format, and/or Multiview Video Coding (MVC) file format, or other video file formats. A draft of ISO BMFF is specified in ISO/IEC 14496-12, available from phenix.int-evry.fr/mpeg/doc_end_user/documents/111_Geneva/wg11/w15177-v6-w15177.zip. A draft of another example file format, MPEG-4 file format, is specified in ISO/IEC 14496-15, available from wg11.sc29.org/doc_end_user/documents/115_Geneva/wg11/w16169-v2-w16169.zip.

ISOBMFF is used as the basis for many codec encapsulation formats, such as the AVC file format, as well as for many multimedia container formats, such as the MPEG-4 file format, the 3GPP file format (3GP), and the digital video broadcasting (DVB) file format.

In addition to continuous media, such as audio and video, static media, such as images, as well as metadata can be stored in a file conforming to ISOBMFF. Files structured according to the ISOBMFF may be used for many purposes, including local media file playback, progressive downloading of a remote file, segments for Dynamic Adaptive Streaming over HTTP (DASH), containers for content to be streamed and its packetization instructions, and recording of received real-time media streams.

A box is an elementary syntax structure in ISOBMFF, including a four-character coded box type, the byte count of the box, and the payload. An ISOBMFF file includes a sequence of boxes, and boxes may contain other boxes. According to ISOBMFF, a Movie box ("moov") contains the metadata for the continuous media streams present in the file, each one represented in the file as a track. Per ISOBMFF, metadata for a track is enclosed in a Track box ("trak"), while the media content of a track is either enclosed in a Media Data box ("mdat") or provided directly in a separate file. The media content for tracks includes a sequence of samples, such as audio or video access units.

ISOBMFF specifies the following types of tracks: a media track, which contains an elementary media stream, a hint track, which either includes media transmission instructions or represents a received packet stream, and a timed metadata track, which comprises time-synchronized metadata.

Although originally designed for storage, the ISOBMFF has proven to be very valuable for streaming, e.g., for progressive download or DASH. For streaming purposes, movie fragments defined in ISOBMFF can be used.

The metadata for each track includes a list of sample description entries, each providing the coding or encapsulation format used in the track and the initialization data needed for processing that format. Each sample is associated with one of the sample description entries of the track.

The ISOBMFF enables specifying sample-specific metadata with various mechanisms. Specific boxes within the Sample Table box ("stbl") have been standardized to respond to common needs. For example, a Sync Sample box ("stss") is used to list the random-access samples of the track. The sample grouping mechanism enables mapping of samples according to a four-character grouping type into groups of samples sharing the same property specified as a sample group description entry in the file. Several grouping types have been specified in the ISOBMFF.

In general, the term VR may refer to the ability to be virtually present in a non-physical world created by the rendering of natural and/or synthetic images and sounds correlated with the movements of the immersed user, thus allowing the user to interact with that world. With the recent progress made in rendering devices, such as head mounted displays (HMD), and VR video (often also referred to as 360-degree video) creation, a significant quality of experience can be offered. VR applications include gaming, training, education, sports video, online shopping, adult entertainment, and so on.

A typical VR system may include the following components and features:
- A camera set, which typically consists of multiple individual cameras pointing to different directions and ideally collectively covering all viewpoints around the camera set.
- Image stitching, where video pictures taken by the multiple individual cameras are synchronized in the time domain and stitched in the space domain, to be a spherical video, but mapped to a rectangular format, such as an equi-rectangular map (like a world map) or cube map.
- Encoding, where the video in the mapped rectangular format is encoded/compressed using a video codec, e.g., H.265/HEVC or H.264/AVC.
- Encapsulation, where the compressed video bitstream(s) may be stored and/or encapsulated in a media format and transmitted (possibly only the subset covering only the area being seen by a user) through a network to a receiver.
- Reception/Decoding, where the receiver receives the video bitstream(s) or part thereof, possibly encapsulated in a format, and sends the decoded video signal or part thereof to a rendering device.
- Rendering/Display, where the rendering device can be e.g., an HMD, which can track head movement and even eye movement and render the corresponding part of the video such that an immersive experience is delivered to the user.

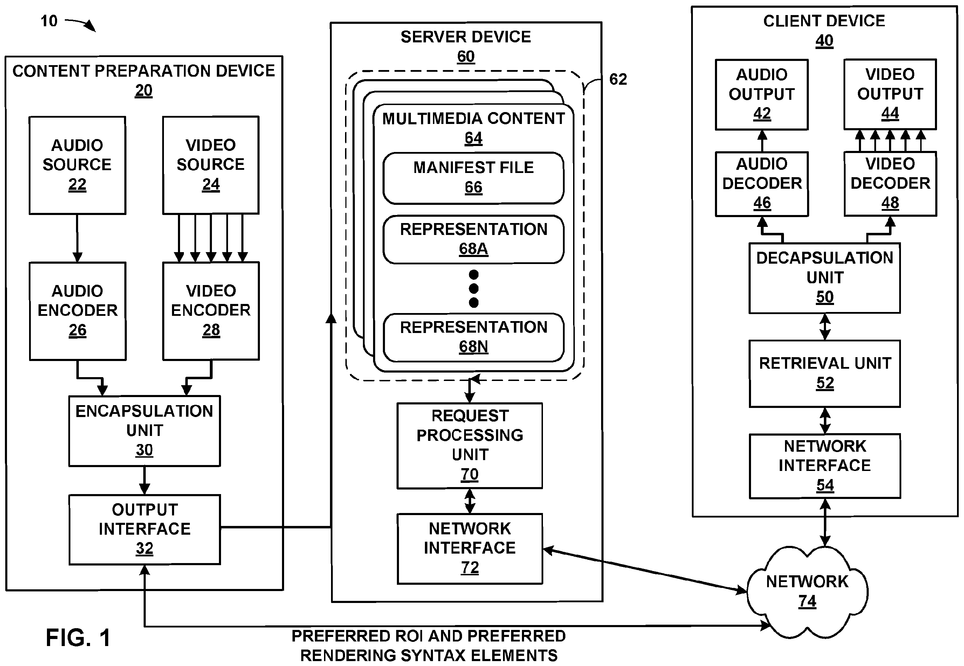

FIG. 1 is a block diagram illustrating an example system 10 that implements techniques for streaming video data over a network. In this example, system 10 includes content preparation device 20, server device 60, and client device 40. Client device 40 and server device 60 are communicatively coupled by network 74, which may comprise the Internet. In some examples, content preparation device 20 and server device 60 may also be coupled by network 74 or another network, or may be directly communicatively coupled. In some examples, content preparation device 20 and server device 60 may comprise the same device.

Content preparation device 20, in the example of FIG. 1, comprises audio source 22 and video source 24. Audio source 22 may comprise, for example, a microphone that produces electrical signals representative of captured audio data to be encoded by audio encoder 26. Alternatively, audio source 22 may comprise a storage medium storing previously recorded audio data, an audio data generator such as a computerized synthesizer, or any other source of audio data. Video source 24 may comprise a video camera that produces video data to be encoded by video encoder 28, a storage medium encoded with previously recorded video data, a video data generation unit such as a computer graphics source, or any other source of video data. Content preparation device 20 is not necessarily communicatively coupled to server device 60 in all examples, but may store multimedia content to a separate medium that is read by server device 60.

Raw audio and video data may comprise analog or digital data. Analog data may be digitized before being encoded by audio encoder 26 and/or video encoder 28. Audio source 22 may obtain audio data from a speaking participant while the speaking participant is speaking, and video source 24 may simultaneously obtain video data of the speaking participant. In other examples, audio source 22 may comprise a computer-readable storage medium comprising stored audio data, and video source 24 may comprise a computer-readable storage medium comprising stored video data. In this manner, the techniques described in this disclosure may be applied to live, streaming, real-time audio and video data or to archived, pre-recorded audio and video data.

Audio frames that correspond to video frames are generally audio frames containing audio data that was captured (or generated) by audio source 22 contemporaneously with video data captured (or generated) by video source 24 that is contained within the video frames. For example, while a speaking participant generally produces audio data by speaking, audio source 22 captures the audio data, and video source 24 captures video data of the speaking participant at the same time, that is, while audio source 22 is capturing the audio data. Hence, an audio frame may temporally correspond to one or more particular video frames. Accordingly, an audio frame corresponding to a video frame generally corresponds to a situation in which audio data and video data were captured at the same time and for which an audio frame and a video frame comprise, respectively, the audio data and the video data that was captured at the same time.

In some examples, audio encoder 26 may encode a timestamp in each encoded audio frame that represents a time at which the audio data for the encoded audio frame was recorded, and similarly, video encoder 28 may encode a timestamp in each encoded video frame that represents a time at which the video data for encoded video frame was recorded. In such examples, an audio frame corresponding to a video frame may comprise an audio frame comprising a timestamp and a video frame comprising the same timestamp. Content preparation device 20 may include an internal clock from which audio encoder 26 and/or video encoder 28 may generate the timestamps, or that audio source 22 and video source 24 may use to associate audio and video data, respectively, with a timestamp.

In some examples, audio source 22 may send data to audio encoder 26 corresponding to a time at which audio data was recorded, and video source 24 may send data to video encoder 28 corresponding to a time at which video data was recorded. In some examples, audio encoder 26 may encode a sequence identifier in encoded audio data to indicate a relative temporal ordering of encoded audio data but without necessarily indicating an absolute time at which the audio data was recorded, and similarly, video encoder 28 may also use sequence identifiers to indicate a relative temporal ordering of encoded video data. Similarly, in some examples, a sequence identifier may be mapped or otherwise correlated with a timestamp.

Audio encoder 26 generally produces a stream of encoded audio data, while video encoder 28 produces a stream of encoded video data. Each individual stream of data (whether audio or video) may be referred to as an elementary stream. An elementary stream is a single, digitally coded (possibly compressed) component of a representation. For example, the coded video or audio part of the representation can be an elementary stream. An elementary stream may be converted into a packetized elementary stream (PES) before being encapsulated within a video file. Within the same representation, a stream ID may be used to distinguish the PES-packets belonging to one elementary stream from the other. The basic unit of data of an elementary stream is a packetized elementary stream (PES) packet. Thus, coded video data generally corresponds to elementary video streams. Similarly, audio data corresponds to one or more respective elementary streams.

Many video coding standards, such as ITU-T H.264/AVC and the ITU-T H.265/High Efficiency Video Coding (HEVC) standard, define the syntax, semantics, and decoding process for error-free bitstreams, any of which conform to a certain profile or level. Video coding standards typically do not specify the encoder, but the encoder is tasked with guaranteeing that the generated bitstreams are standard-compliant for a decoder. In the context of video coding standards, a "profile" corresponds to a subset of algorithms, features, or tools and constraints that apply to them. As defined by the H.264 standard, for example, a "profile" is a subset of the entire bitstream syntax that is specified by the H.264 standard. A "level" corresponds to the limitations of the decoder resource consumption, such as, for example, decoder memory and computation, which are related to the resolution of the pictures, bit rate, and block processing rate. A profile may be signalled with a profile idc (profile indicator) value, while a level may be signalled with a level_idc (level indicator) value.

The H.264 standard, for example, recognizes that, within the bounds imposed by the syntax of a given profile, it is still possible to require a large variation in the performance of encoders and decoders depending upon the values taken by syntax elements in the bitstream such as the specified size of the decoded pictures. The H.264 standard further recognizes that, in many applications, it is neither practical nor economical to implement a decoder capable of dealing with all hypothetical uses of the syntax within a particular profile. Accordingly, the H.264 standard defines a "level" as a specified set of constraints imposed on values of the syntax elements in the bitstream. These constraints may be simple limits on values. Alternatively, these constraints may take the form of constraints on arithmetic combinations of values (e.g., picture width multiplied by picture height multiplied by number of pictures decoded per second). The H.264 standard further provides that individual implementations may support a different level for each supported profile.

A decoder conforming to a profile ordinarily supports all the features defined in the profile. For example, as a coding feature, B-picture coding is not supported in the baseline profile of H.264/AVC but is supported in other profiles of H.264/AVC. A decoder conforming to a level should be capable of decoding any bitstream that does not require resources beyond the limitations defined in the level. Definitions of profiles and levels may be helpful for interpretability. For example, during video transmission, a pair of profile and level definitions may be negotiated and agreed for a whole transmission session. More specifically, in H.264/AVC, a level may define limitations on the number of macroblocks that need to be processed, decoded picture buffer (DPB) size, coded picture buffer (CPB) size, vertical motion vector range, maximum number of motion vectors per two consecutive MBs, and whether a B-block can have sub-macroblock partitions less than 8x8 pixels. In this manner, a decoder may determine whether the decoder is capable of properly decoding the bitstream.

In the example of FIG. 1, encapsulation unit 30 of content preparation device 20 receives elementary streams comprising coded video data from video encoder 28 and elementary streams comprising coded audio data from audio encoder 26. In some examples, video encoder 28 and audio encoder 26 may each include packetizers for forming PES packets from encoded data. In other examples, video encoder 28 and audio encoder 26 may each interface with respective packetizers for forming PES packets from encoded data. In still other examples, encapsulation unit 30 may include packetizers for forming PES packets from encoded audio and video data.

Video encoder 28 may encode video data of multimedia content in a variety of ways, to produce different representations of the multimedia content at various bitrates and with various characteristics, such as pixel resolutions, frame rates, conformance to various coding standards, conformance to various profiles and/or levels of profiles for various coding standards, representations having one or multiple views (e.g., for two-dimensional or three-dimensional playback), or other such characteristics. A representation, as used in this disclosure, may comprise one of audio data, video data, text data (e.g., for closed captions), or other such data. The representation may include an elementary stream, such as an audio elementary stream or a video elementary stream. Each PES packet may include a stream_id that identifies the elementary stream to which the PES packet belongs. Encapsulation unit 30 is responsible for assembling elementary streams into video files (e.g., segments) of various representations.

Encapsulation unit 30 receives PES packets for elementary streams of a representation from audio encoder 26 and video encoder 28 and forms corresponding network abstraction layer (NAL) units from the PES packets. Coded video segments may be organized into NAL units, which provide a "network-friendly" video representation addressing applications such as video telephony, storage, broadcast, or streaming. NAL units can be categorized to Video Coding Layer (VCL) NAL units (e.g., VCL data) and non-VCL NAL units. VCL units (also referred to as VCL data) may contain the core compression engine and may include block, macroblock, and/or slice level data. Other NAL units may be non-VCL NAL units. In some examples, a coded picture in one time instance, normally presented as a primary coded picture, may be contained in an access unit, which may include one or more NAL units.

Non-VCL NAL units may include parameter set NAL units and SEI NAL units, among others. Parameter sets may contain sequence-level header information (in sequence parameter sets (SPS)) and the infrequently changing picture-level header information (in picture parameter sets (PPS)). With parameter sets (e.g., PPS and SPS), infrequently changing information need not to be repeated for each sequence or picture, hence coding efficiency may be improved. Furthermore, the use of parameter sets may enable out-of-band transmission of the important header information, avoiding the need for redundant transmissions for error resilience. In out-of-band transmission examples, parameter set NAL units may be transmitted on a different channel than other NAL units, such as SEI NAL units.

Supplemental Enhancement Information (SEI) may contain information that is not necessary for decoding the coded pictures samples from VCL NAL units, but may assist in processes related to decoding, display, error resilience, and other purposes. SEI messages may be contained in non-VCL NAL units. SEI messages are the normative part of some standard specifications, and thus are not always mandatory for standard compliant decoder implementation. SEI messages may be sequence level SEI messages or picture level SEI messages. Some sequence level information may be contained in SEI messages, such as scalability information SEI messages in the example of SVC and view scalability information SEI messages in MVC. These example SEI messages may convey information on, e.g., extraction of operation points and characteristics of the operation points. In addition, encapsulation unit 30 may form a manifest file, such as a media presentation descriptor (MPD) that describes characteristics of the representations. Encapsulation unit 30 may format the MPD according to extensible markup language (XML).

Encapsulation unit 30 may provide data for one or more representations of multimedia content, along with the manifest file (e.g., the MPD) to output interface 32. Output interface 32 may comprise a network interface or an interface for writing to a storage medium, such as a universal serial bus (USB) interface, a CD or DVD writer or burner, an interface to magnetic or flash storage media, a server, or other interfaces for storing or transmitting media data. Encapsulation unit 30 may provide data of each of the representations of multimedia content to output interface 32, which may send the data to server device 60 via network transmission or storage media. In the example of FIG. 1, server device 60 includes storage medium 62 that stores various multimedia contents 64, each including a respective manifest file 66 and one or more representations 68A-68N (representations 68). In some examples, output interface 32 may also send data directly to network 74.

In some examples, representations 68 may be separated into adaptation sets. That is, various subsets of representations 68 may include respective common sets of characteristics, such as codec, profile and level, resolution, number of views, file format for segments, text type information that may identify a language or other characteristics of text to be displayed with the representation and/or audio data to be decoded and presented, e.g., by speakers, camera angle information that may describe a camera angle or real-world camera perspective of a scene for representations in the adaptation set, rating information that describes content suitability for particular audiences, or the like.

Manifest file 66 may include data indicative of the subsets of representations 68 corresponding to particular adaptation sets, as well as common characteristics for the adaptation sets. Manifest file 66 may also include data representative of individual characteristics, such as bitrates, for individual representations of adaptation sets. In this manner, an adaptation set may provide for simplified network bandwidth adaptation. Representations in an adaptation set may be indicated using child elements of an adaptation set element of manifest file 66.

Server device 60 includes request processing unit 70 and network interface 72. In some examples, server device 60 may include a plurality of network interfaces. Furthermore, any or all of the features of server device 60 may be implemented on other devices of a content delivery network, such as routers, bridges, proxy devices, switches, or other devices. In some examples, intermediate devices of a content delivery network may cache data of multimedia content 64, and include components that conform substantially to those of server device 60. In general, network interface 72 is configured to send and receive data via network 74.

Request processing unit 70 is configured to receive network requests from client devices, such as client device 40, for data of storage medium 62. For example, request processing unit 70 may implement hypertext transfer protocol (HTTP) version 1.1, as described in RFC 2616, "Hypertext Transfer Protocol - HTTP/1.1," by R. Fielding et al, Network Working Group, IETF, June 1999. That is, request processing unit 70 may be configured to receive HTTP GET or partial GET requests and provide data of multimedia content 64 in response to the requests. The requests may specify a segment of one of representations 68, e.g., using a URL of the segment. In some examples, the requests may also specify one or more byte ranges of the segment, thus comprising partial GET requests. Request processing unit 70 may further be configured to service HTTP HEAD requests to provide header data of a segment of one of representations 68. In any case, request processing unit 70 may be configured to process the requests to provide requested data to a requesting device, such as client device 40.

Additionally or alternatively, request processing unit 70 may be configured to deliver media data via a broadcast or multicast protocol, such as eMBMS. Content preparation device 20 may create DASH segments and/or sub-segments in substantially the same way as described, but server device 60 may deliver these segments or sub-segments using eMBMS or another broadcast or multicast network transport protocol. For example, request processing unit 70 may be configured to receive a multicast group join request from client device 40. That is, server device 60 may advertise an Internet protocol (IP) address associated with a multicast group to client devices, including client device 40, associated with particular media content (e.g., a broadcast of a live event). Client device 40, in turn, may submit a request to join the multicast group. This request may be propagated throughout network 74, e.g., routers making up network 74, such that the routers are caused to direct traffic destined for the IP address associated with the multicast group to subscribing client devices, such as client device 40.

Request processing unit 70 may be configured to assemble data from requests. For example, request processing unit 70 may extract, from each request from client devices, an indication of one or more regions of an image that have been requested. For instance, request processing unit 70 may extract a user's field of view for a particular image from a request from client device 40. After extracting, request processing unit 70 may generate an entry in a table or database indicating, for each image, one or more regions of a user's field of view that were requested by a client device. (e.g., client device 40).

Request processing unit 70 may derive one or more most-interested regions from the assembled data. More specifically, for instance, in response to determining that one or more regions of an image are the most-frequently requested regions of the image compared to other regions of the image, request processing unit 70 may select the one or more regions as the one or more most-interested regions of the image. In some examples, request processing unit 70 may select one or more regions as the one or more most-interested regions of the image when the one or more regions have been included in a user's field of view at a frequency that satisfies a threshold. For instance, request processing unit 70 may select the one or more regions as the one or more most-interested regions of the image when the assembled data indicates that at least half of the user's fields of view include the one or more regions.

As illustrated in the example of FIG. 1, multimedia content 64 includes manifest file 66, which may correspond to a media presentation description (MPD). Manifest file 66 may contain descriptions of different alternative representations 68 (e.g., video services with different qualities) and the description may include, e.g., codec information, a profile value, a level value, a bit rate, and other descriptive characteristics of representations 68. Client device 40 may retrieve the MPD of a media presentation to determine how to access segments of representations 68.

In particular, retrieval unit 52 may retrieve configuration data (not shown) of client device 40 to determine decoding capabilities of video decoder 48 and rendering capabilities of video output 44. The configuration data may also include any or all of a language preference selected by a user of client device 40, one or more camera perspectives corresponding to depth preferences set by the user of client device 40, and/or a rating preference selected by the user of client device 40. Retrieval unit 52 may comprise, for example, a web browser or a media client configured to submit HTTP GET and partial GET requests. Retrieval unit 52 may correspond to software instructions executed by one or more processors or processing units (not shown) of client device 40. In some examples, all or portions of the functionality described with respect to retrieval unit 52 may be implemented in hardware, or a combination of hardware, software, and/or firmware, where requisite hardware, e.g., in the form of fixed function and/or programmable processing circuitry, may be provided to execute instructions for software or firmware.

Retrieval unit 52 may compare the decoding and rendering capabilities of client device 40 to characteristics of representations 68 indicated by information of manifest file 66. Retrieval unit 52 may initially retrieve at least a portion of manifest file 66 to determine characteristics of representations 68. For example, retrieval unit 52 may request a portion of manifest file 66 that describes characteristics of one or more adaptation sets. Retrieval unit 52 may select a subset of representations 68 (e.g., an adaptation set) having characteristics that can be satisfied by the coding and rendering capabilities of client device 40. Retrieval unit 52 may then determine bitrates for representations in the adaptation set, determine a currently available amount of network bandwidth, and retrieve segments from one of the representations having a bit rate that can be satisfied by the network bandwidth.

In general, higher bitrate representations may yield higher quality video playback, while lower bitrate representations may provide sufficient quality video playback when available network bandwidth decreases. Accordingly, when available network bandwidth is relatively high, retrieval unit 52 may retrieve data from relatively high bitrate representations, whereas when available network bandwidth is low, retrieval unit 52 may retrieve data from relatively low bitrate representations. In this manner, client device 40 may stream multimedia data over network 74 while also adapting to changing network bandwidth availability of network 74.

Additionally or alternatively, retrieval unit 52 may be configured to receive data in accordance with a broadcast or multicast network protocol, such as eMBMS or IP multicast. In such examples, retrieval unit 52 may submit a request to join a multicast network group associated with particular media content. After joining the multicast group, retrieval unit 52 may receive data of the multicast group without further requests issued to server device 60 or content preparation device 20. Retrieval unit 52 may submit a request to leave the multicast group when data of the multicast group is no longer needed, e.g., to stop playback or to change channels to a different multicast group.

Network interface 54 may receive and provide data of segments of a selected representation to retrieval unit 52, which may in turn provide the segments to decapsulation unit 50. Decapsulation unit 50 may decapsulate elements of a video file into constituent PES streams, depacketize the PES streams to retrieve encoded data, and send the encoded data to either audio decoder 46 or video decoder 48, depending on whether the encoded data is part of an audio or video stream, e.g., as indicated by PES packet headers of the stream. Audio decoder 46 decodes encoded audio data and sends the decoded audio data to audio output 42, while video decoder 48 decodes encoded video data and sends the decoded video data, which may include a plurality of views of a stream, to video output 44.

Video encoder 28, video decoder 48, audio encoder 26, audio decoder 46, encapsulation unit 30, retrieval unit 52, and decapsulation unit 50 each may be implemented as any of a variety of suitable processing circuitry, as applicable, including fixed-function and/or programmable processing circuitry, such as one or more microprocessors, digital signal processors (DSPs), application specific integrated circuits (ASICs), field programmable gate arrays (FPGAs), discrete logic circuitry, software, hardware, firmware or any combinations thereof. Each of video encoder 28 and video decoder 48 may be included in one or more encoders or decoders, either of which may be integrated as part of a combined video encoder/decoder (CODEC). Likewise, each of audio encoder 26 and audio decoder 46 may be included in one or more encoders or decoders, either of which may be integrated as part of a combined CODEC. An apparatus including video encoder 28, video decoder 48, audio encoder 26, audio decoder 46, encapsulation unit 30, retrieval unit 52, and/or decapsulation unit 50 may comprise an integrated circuit, a microprocessor, and/or a wireless communication device, such as a cellular telephone.

Encapsulation unit 30 may determine one or more most-interested regions of an image. As used herein, a most-interested region (may also be called a preferred ROI and/or preferred viewport) may refer to a region of an image that has a high likelihood of being viewed by a user. For example, a most-interested region may refer to a region of an image that is selected by a director or producer. In this context, a most-interested region chosen by a director or producer of the video data may be referred to as a preferred region-of-interest or a preferred viewport. A director may specify certain viewports and/or regions-of-interest as being preferably viewed by the user for a better user experience from the content generator's point of view (e.g., for better storytelling). A viewport may be defined as a field of view/vision (FOV) being observed by a user. As such, a preferred viewport may be the preferred FOV of a user. A preferred region-of-interest may be any region of the video data (e.g., 360-degree video data) that a director or producer of the video data indicates as being preferably viewed by the user. The preferred region-of-interest may be larger than, equal to, or smaller than a user's FOV.

In other examples, a most-interested region may refer to a region of an image that is derived by a computing device from user statistics by a service or content provider, e.g., through the statistics of which regions have been requested/seen the most by users when the omnidirectional video content was provided through a streaming service.

Encapsulation unit 30 may encapsulate data representative of one or more most-interested regions. In some examples, encapsulation unit 30 may encapsulate the data representative of one or more most-interested regions external to VCL data, which may include actual video data used by the video coding engine. In some examples, the data representative of one or more most interested regions may be included in a bitstream. For instance, encapsulation unit 30 may encapsulate a SEI message that includes the data representative of one or more most-interested regions external to the VCL data. In some examples, encapsulation unit 30 may encapsulate a file format data that includes the data representative of one or more most-interested regions external to the video bitstream (and consequently also external to the VCL data of the bitstream). For instance, encapsulation unit 30 may encapsulate a box (e.g., sample-to-group) or a timed metadata track that includes the data representative of one or more most-interested regions external to the VCL data.

In some situations, the preferred regions-of-interest or preferred viewports indicated in the bitstream may not be the same size of aspect ratio of a display being used by a user. A user device may have many techniques available to adjust the preferred regions-of-interest or viewports to fit the display. As will be discussed in greater detail below, this disclosure proposes techniques where content preparation device 20 generates one or more syntax element that indicate the preferred rendering operations to execute when making such adjustments on the preferred regions-of-interest or viewports to fit the display. Likewise, client device 40 may be configured to receive the bitstream, parse the one or more syntax elements indicating the preferred rendering operations, and render the preferred regions-of-interest or viewports to fit the display in accordance with the indicated preferred rendering operations.

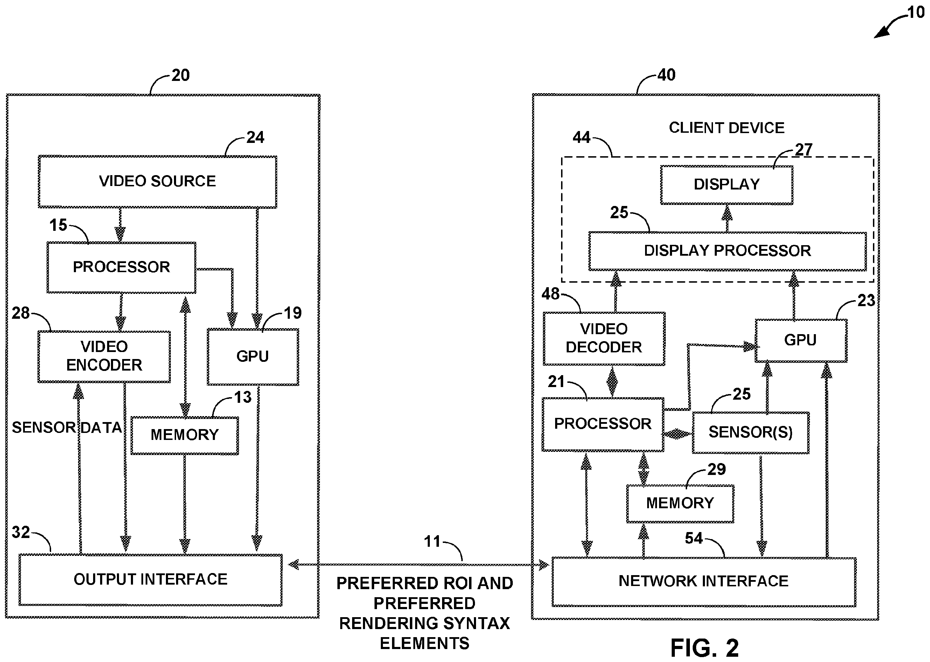

FIG. 2 is a block diagram of content preparation device 20 and client device 40 of system 10 of FIG. 1 in more detail. Content preparation device 20 and client device 40 may comprise any of a wide range of devices, including desktop computers, notebook (i.e., laptop) computers, tablet computers, set-top boxes, telephone handsets such as so-called "smart" phones, so-called "smart" pads, televisions, cameras, display devices, digital media players, video gaming consoles, video streaming device, or the like. In some cases, content preparation device 20 and client device 40 may be equipped for wireless communication. In one example, client device 40 may be a virtual reality (VR) head mounted display (HMD), and video source device 24 may generate and stream 360-degree video to client device 40.

Client device 40 may receive the encoded video data to be decoded via computer-readable medium 11 and store the encoded video data in a memory 29. Computer-readable medium 11 may comprise any type of medium or device capable of moving the encoded video data from content preparation device 20 to client device 40. In one example, computer-readable medium 11 may comprise a communication medium to enable content preparation device 20 to transmit encoded video data directly to client device 40 in real-time. The encoded video data may be modulated according to a communication standard, such as a wireless communication protocol, and transmitted to client device 40. The communication medium may comprise any wireless or wired communication medium, such as a radio frequency (RF) spectrum or one or more physical transmission lines. The communication medium may form part of a packet-based network, such as a local area network, a wide-area network, or a global network such as the Internet. The communication medium may include routers, switches, base stations, or any other equipment that may be useful to facilitate communication from content preparation device 20 to client device 40.

Client device 40 may access the encoded video data through any standard data connection, including an Internet connection. This may include a wireless channel (e.g., a Wi-Fi connection), a wired connection (e.g., DSL, cable modem, etc.), or a combination of both that is suitable for accessing encoded video data stored on a file server. The transmission of encoded video data from the storage device may be a streaming transmission, a download transmission, or a combination thereof.

The techniques of this disclosure are not necessarily limited to wireless applications or settings. The techniques may be applied to video coding in support of any of a variety of multimedia applications, such as over-the-air television broadcasts, cable television transmissions, satellite television transmissions, Internet streaming video transmissions, such as dynamic adaptive streaming over HTTP (DASH), digital video that is encoded onto a data storage medium, decoding of digital video stored on a data storage medium, or other applications. In some examples, system 10 may be configured to support one-way or two-way video transmission to support applications such as video streaming, video playback, video broadcasting, and/or video telephony.

As illustrated in the example system 10 of FIG. 2, content preparation device 20 includes a video encoder 28 that encodes video data, such as 360-degree video data, from a video source 24, and transmits the encoded video via output interface 32. In examples that include one or more sensors 33 (e.g., to detect head movement/position, body movement/position or provide eye/gaze tracking) positioned in client device 40, video encoder 28 may receive sensor data from the client device via output interface 32 in order to determine movement of a user. In some examples, the video data may also be received from video source 24 by a graphics processing unit (GPU) 19, which optionally may be configured to transmit processed video data to output interface 32. In addition, processor 15 may be configured to receive the video data from video source 24 and process the video data for use by video encoder 28 and/or GPU 19. Content preparation device 20 may include a microphone or array of microphones (not shown) capable of encoding surround sound audio.

Client device may include a video decoder 48 and a GPU 23. The encoded video data may be transmitted wirelessly from the content preparation device 20 and received at client device 40 via network interface 54, and processed by a processor 21. The resulting processed video data is then decoded by decoder 48, and/or utilized by a graphics processing unit (GPU) 23 to generate or render an FOV via a display processor 25 and display 27. In accordance with techniques of the disclosure, client device 40 may receive encoded video data that includes one or more syntax elements indicating preferred regions-of-interest or preferred viewports as well as syntax elements indicating preferred rendering operations for the preferred regions-of-interest or preferred viewports. Client device 40 may be configured to parse the bitstream and determine the preferred rendering operations from the values of the syntax elements. GPU 23, processor 21, and/or display processor 25 may be configured to perform the preferred rendering operations to adjust the preferred regions-of-interest or preferred viewports for display on display 27.

In examples where client device 40 is a virtual reality (VR) head mounted display (HMD), for example, one or more sensors 33 may also be included, such as one or more motion sensors, to sense the orientation and movement of the user. Display processor 25 receives decoded video data from the video decoder 48, along with the rendered preferred regions-of-interest or preferred viewports from GPU 23, and processes the received data so as to enable the 360-degree video to be generated for viewing by a user on a display 27 of client device 40.

Display device 27 displays the decoded video data to a user, and may comprise any of a variety of display devices such as a 360-degree video display and a VR HMD, a liquid crystal display (LCD), a plasma display, an organic light emitting diode (OLED) display, or another type of display device.

Display processor 25 may be a processor configured to perform 2D operations on image data, such as up-sampling, down-sampling, blending, compositing, scaling, rotation, and other pixel processing, including the preferred rendering operations described below. In some examples, display processor 25 may process pixels from multiple layers. For example, display processor 25 may blend pixels from multiple layers, and write back the blended pixels into memory in tile format. Then, the blended pixels are read from memory in raster format and sent to display 27 for presentment.

A newly developed video coding standard, namely High Efficiency Video Coding (HEVC), developed by the Joint Collaboration Team on Video Coding (JCT-VC) of ITU-T Video Coding Experts Group (VCEG) and ISO/IEC Motion Picture Experts Group (MPEG). A draft of HEVC is available from http://phenix.int-evry.fr/jct/doc_end_user/documents/12_Geneva/wg11/JCTVC-L1003-v34.zip. The HEVC standard is also presented jointly in Recommendation ITU-T H.265 and International Standard ISO/IEC 23008-2, both entitled "High efficiency video coding," and both published October 2014.

The JCT-VC developed the HEVC standard. The HEVC standardization efforts are based on an evolving model of a video coding device referred to as the HEVC Test Model (HM). The HM presumes several additional capabilities of video coding devices relative to existing devices according to, e.g., ITU-T H.264/AVC. For example, whereas H.264 provides nine intra-prediction encoding modes, the HEVC HM may provide as many as thirty-three intra-prediction encoding modes. Video encoder 28 and video decoder 48 may be configured to encode and decode video data according to HEVC.

In general, the working model of the HM describes that a video frame or picture may be divided into a sequence of treeblocks or largest coding units (LCU) that include both luma and chroma samples. Syntax data within a bitstream may define a size for the LCU, which is a largest coding unit in terms of the number of pixels. A slice includes a number of consecutive treeblocks in coding order. A video frame or picture may be partitioned into one or more slices. Each treeblock may be split into coding units (CUs) according to a quadtree. In general, a quadtree data structure includes one node per CU, with a root node corresponding to the treeblock. If a CU is split into four sub-CUs, the node corresponding to the CU includes four leaf nodes, each of which corresponds to one of the sub-CUs.

Each node of the quadtree data structure may provide syntax data for the corresponding CU. For example, a node in the quadtree may include a split flag, indicating whether the CU corresponding to the node is split into sub-CUs. Syntax elements for a CU may be defined recursively, and may depend on whether the CU is split into sub-CUs. If a CU is not split further, it is referred as a leaf-CU. In this disclosure, four sub-CUs of a leaf-CU will also be referred to as leaf-CUs even if there is no explicit splitting of the original leaf-CU. For example, if a CU at 16x16 size is not split further, the four 8x8 sub-CUs will also be referred to as leaf-CUs although the 16x16 CU was never split.

A CU has a similar purpose as a macroblock of the H.264 standard, except that a CU does not have a size distinction. For example, a treeblock may be split into four child nodes (also referred to as sub-CUs), and each child node may in turn be a parent node and be split into another four child nodes. A final, unsplit child node, referred to as a leaf node of the quadtree, comprises a coding node, also referred to as a leaf-CU. Syntax data associated with a coded bitstream may define a maximum number of times a treeblock may be split, referred to as a maximum CU depth, and may also define a minimum size of the coding nodes. Accordingly, a bitstream may also define a smallest coding unit (SCU). This disclosure uses the term "block" to refer to any of a CU, PU, or TU, in the context of HEVC, or similar data structures in the context of other standards (e.g., macroblocks and sub-blocks thereof in H.264/AVC).

A CU includes a coding node and prediction units (PUs) and transform units (TUs) associated with the coding node. A size of the CU corresponds to a size of the coding node and must be square in shape. The size of the CU may range from 8x8 pixels up to the size of the treeblock with a maximum of 64x64 pixels or greater. Each CU may contain one or more PUs and one or more TUs. Syntax data associated with a CU may describe, for example, partitioning of the CU into one or more PUs. Partitioning modes may differ between whether the CU is skip or direct mode encoded, intra-prediction mode encoded, or inter-prediction mode encoded. PUs may be partitioned to be non-square in shape. Syntax data associated with a CU may also describe, for example, partitioning of the CU into one or more TUs according to a quadtree. A TU can be square or non-square (e.g., rectangular) in shape.

The HEVC standard allows for transformations according to TUs, which may be different for different CUs. The TUs are typically sized based on the size of PUs within a given CU defined for a partitioned LCU, although this may not always be the case. The TUs are typically the same size or smaller than the PUs. In some examples, residual samples corresponding to a CU may be subdivided into smaller units using a quadtree structure known as "residual quad tree" (RQT). The leaf nodes of the RQT may be referred to as transform units (TUs). Pixel difference values associated with the TUs may be transformed to produce transform coefficients, which may be quantized.

A leaf-CU may include one or more prediction units (PUs). In general, a PU represents a spatial area corresponding to all or a portion of the corresponding CU, and may include data for retrieving a reference sample for the PU. Moreover, a PU includes data related to prediction. For example, when the PU is intra-mode encoded, data for the PU may be included in a residual quadtree (RQT), which may include data describing an intra-prediction mode for a TU corresponding to the PU. As another example, when the PU is inter-mode encoded, the PU may include data defining one or more motion vectors for the PU. The data defining the motion vector for a PU may describe, for example, a horizontal component of the motion vector, a vertical component of the motion vector, a resolution for the motion vector (e.g., one-quarter pixel precision or one-eighth pixel precision), a reference picture to which the motion vector points, and/or a reference picture list (e.g., List 0, List 1, or List C) for the motion vector.

A leaf-CU having one or more PUs may also include one or more transform units (TUs). The transform units may be specified using an RQT (also referred to as a TU quadtree structure), as discussed above. For example, a split flag may indicate whether a leaf-CU is split into four transform units. Then, each transform unit may be split further into further sub-TUs. When a TU is not split further, it may be referred to as a leaf-TU. Generally, for intra coding, all the leaf-TUs belonging to a leaf-CU share the same intra prediction mode. That is, the same intra-prediction mode is generally applied to calculate predicted values for all TUs of a leaf-CU. For intra coding, a video encoder may calculate a residual value for each leaf-TU using the intra prediction mode, as a difference between the portion of the CU corresponding to the TU and the original block. A TU is not necessarily limited to the size of a PU. Thus, TUs may be larger or smaller than a PU. For intra coding, a PU may be collocated with a corresponding leaf-TU for the same CU. In some examples, the maximum size of a leaf-TU may correspond to the size of the corresponding leaf-CU.

Moreover, TUs of leaf-CUs may also be associated with respective quadtree data structures, referred to as residual quadtrees (RQTs). That is, a leaf-CU may include a quadtree indicating how the leaf-CU is partitioned into TUs. The root node of a TU quadtree generally corresponds to a leaf-CU, while the root node of a CU quadtree generally corresponds to a treeblock (or LCU). TUs of the RQT that are not split are referred to as leaf-TUs. In general, this disclosure uses the terms CU and TU to refer to leaf-CU and leaf-TU, respectively, unless noted otherwise.

A video sequence typically includes a series of video frames or pictures. A group of pictures (GOP) generally comprises a series of one or more of the video pictures. A GOP may include syntax data in a header of the GOP, a header of one or more of the pictures, or elsewhere, that describes a number of pictures included in the GOP. Each slice of a picture may include slice syntax data that describes an encoding mode for the respective slice. Video encoder 28 typically operates on video blocks within individual video slices in order to encode the video data. A video block may correspond to a coding node within a CU. The video blocks may have fixed or varying sizes, and may differ in size according to a specified coding standard.

As an example, the HM supports prediction in various PU sizes. Assuming that the size of a particular CU is 2Nx2N, the HM supports intra-prediction in PU sizes of 2Nx2N or NxN, and inter-prediction in symmetric PU sizes of 2Nx2N, 2NxN, Nx2N, or NxN. The HM also supports asymmetric partitioning for inter-prediction in PU sizes of 2NxnU, 2NxnD, nLx2N, and nRx2N. In asymmetric partitioning, one direction of a CU is not partitioned, while the other direction is partitioned into 25% and 75%. The portion of the CU corresponding to the 25% partition is indicated by an "n" followed by an indication of "Up", "Down," "Left," or "Right." Thus, for example, "2NxnU" refers to a 2Nx2N CU that is partitioned horizontally with a 2Nx0.5N PU on top and a 2Nx1.5N PU on bottom.

In this disclosure, "NxN" and "N by N" may be used interchangeably to refer to the pixel dimensions of a video block in terms of vertical and horizontal dimensions, e.g., 16x16 pixels or 16 by 16 pixels. In general, a 16x16 block will have 16 pixels in a vertical direction (y = 16) and 16 pixels in a horizontal direction (x = 16). Likewise, an NxN block generally has N pixels in a vertical direction and N pixels in a horizontal direction, where N represents a nonnegative integer value. The pixels in a block may be arranged in rows and columns. Moreover, blocks need not necessarily have the same number of pixels in the horizontal direction as in the vertical direction. For example, blocks may comprise NxM pixels, where M is not necessarily equal to N.

Following intra-predictive or inter-predictive coding using the PUs of a CU, video encoder 28 may calculate residual data for the TUs of the CU. The PUs may comprise syntax data describing a method or mode of generating predictive pixel data in the spatial domain (also referred to as the pixel domain) and the TUs may comprise coefficients in the transform domain following application of a transform, e.g., a discrete cosine transform (DCT), an integer transform, a wavelet transform, or a conceptually similar transform to residual video data. The residual data may correspond to pixel differences between pixels of the unencoded picture and prediction values corresponding to the PUs. Video encoder 28 may form the TUs including the residual data for the CU, and then transform the TUs to produce transform coefficients for the CU.

Following any transforms to produce transform coefficients, video encoder 28 may perform quantization of the transform coefficients. Quantization generally refers to a process in which transform coefficients are quantized to possibly reduce the amount of data used to represent the coefficients, providing further compression. The quantization process may reduce the bit depth associated with some or all of the coefficients. For example, an *n*-bit value may be rounded down to an *m*-bit value during quantization, where *n* is greater than *m.*

Following quantization, the video encoder may scan the transform coefficients, producing a one-dimensional vector from the two-dimensional matrix including the quantized transform coefficients. The scan may be designed to place higher energy (and therefore lower frequency) coefficients at the front of the array and to place lower energy (and therefore higher frequency) coefficients at the back of the array. In some examples, video encoder 28 may utilize a predefined scan order to scan the quantized transform coefficients to produce a serialized vector that can be entropy encoded. In other examples, video encoder 28 may perform an adaptive scan. After scanning the quantized transform coefficients to form a one-dimensional vector, video encoder 28 may entropy encode the one-dimensional vector, e.g., according to context-adaptive variable length coding (CAVLC), context-adaptive binary arithmetic coding (CABAC), syntax-based context-adaptive binary arithmetic coding (SBAC), Probability Interval Partitioning Entropy (PIPE) coding or another entropy encoding methodology. Video encoder 28 may also entropy encode syntax elements associated with the encoded video data for use by video decoder 48 in decoding the video data.

To perform CABAC, video encoder 28 may assign a context within a context model to a symbol to be transmitted. The context may relate to, for example, whether neighboring values of the symbol are non-zero or not. To perform CAVLC, video encoder 28 may select a variable length code for a symbol to be transmitted. Codewords in VLC may be constructed such that relatively shorter codes correspond to more probable symbols, while longer codes correspond to less probable symbols. In this way, the use of VLC may achieve a bit savings over, for example, using equal-length codewords for each symbol to be transmitted. The probability determination may be based on a context assigned to the symbol.

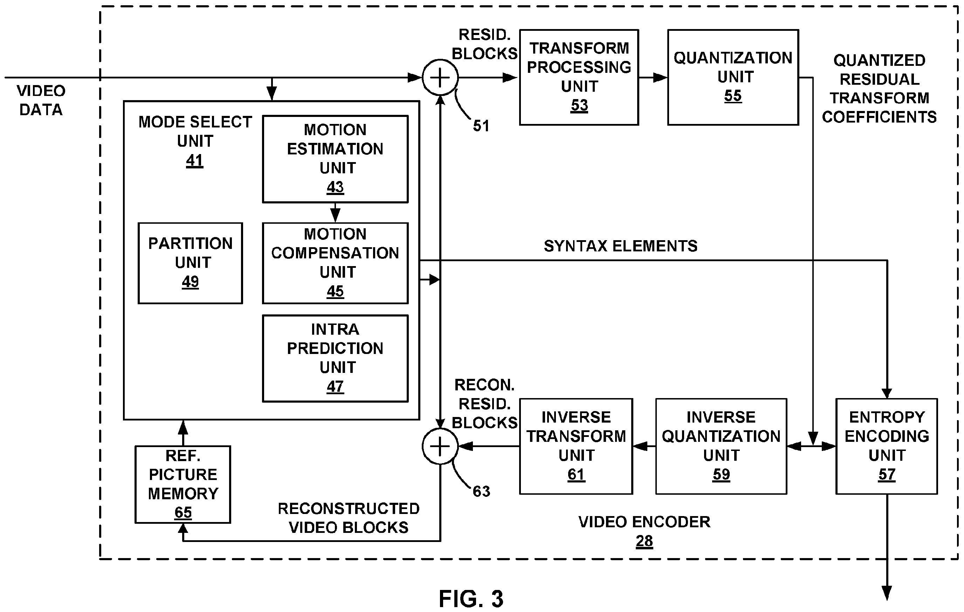

FIG. 3 is a block diagram illustrating an example of video encoder 28 that may be configured to perform the techniques of this disclosure. Video encoder 28 may perform intra- and inter-coding of video blocks within video slices. Intra-coding relies on spatial prediction to reduce or remove spatial redundancy in video within a given video frame or picture. Inter-coding relies on temporal prediction to reduce or remove temporal redundancy in video within adjacent frames or pictures of a video sequence. Intra-mode (I mode) may refer to any of several spatial based coding modes. Inter-modes, such as uni-directional prediction (P mode) or bi-prediction (B mode), may refer to any of several temporal-based coding modes.

As shown in FIG. 3, video encoder 28 receives a current video block within a video frame to be encoded. In the example of FIG. 3, video encoder 28 includes mode select unit 41, reference picture memory 65, summer 51, transform processing unit 53, quantization unit 55, and entropy encoding unit 57. Mode select unit 41, in turn, includes motion compensation unit 45, motion estimation unit 43, intra-prediction unit 47, and partition unit 49. For video block reconstruction, video encoder 28 also includes inverse quantization unit 59, inverse transform unit 61, and summer 63. A deblocking filter (not shown in FIG. 3) may also be included to filter block boundaries to remove blockiness artifacts from reconstructed video. If desired, the deblocking filter would typically filter the output of summer 63. Additional filters (in loop or post loop) may also be used in addition to the deblocking filter. Such filters are not shown for brevity, but if desired, may filter the output of summer 51 (as an in-loop filter).

During the encoding process, video encoder 28 receives a video frame or slice to be coded. The frame or slice may be divided into multiple video blocks. Motion estimation unit 43 and motion compensation unit 45 perform inter-predictive coding of the received video block relative to one or more blocks in one or more reference frames to provide temporal prediction. Intra-prediction unit 47 may alternatively perform intra-predictive coding of the received video block relative to one or more neighboring blocks in the same frame or slice as the block to be coded to provide spatial prediction. Video encoder 28 may perform multiple coding passes, e.g., to select an appropriate coding mode for each block of video data.

Moreover, partition unit 49 may partition blocks of video data into sub-blocks, based on evaluation of previous partitioning schemes in previous coding passes. For example, partition unit 49 may initially partition a frame or slice into LCUs, and partition each of the LCUs into sub-CUs based on rate-distortion analysis (e.g., rate-distortion optimization). Mode select unit 41 may further produce a quadtree data structure indicative of partitioning of an LCU into sub-CUs. Leaf-node CUs of the quadtree may include one or more PUs and one or more TUs.

Mode select unit 41 may select one of the coding modes, intra or inter, e.g., based on error results, and provides the resulting intra- or inter-coded block to summer 51 to generate residual block data and to summer 63 to reconstruct the encoded block for use as a reference frame. Mode select unit 41 also provides syntax elements, such as motion vectors, intra-mode indicators, partition information, and other such syntax information, to entropy encoding unit 57.

Motion estimation unit 43 and motion compensation unit 45 may be highly integrated, but are illustrated separately for conceptual purposes. Motion estimation, performed by motion estimation unit 43, is the process of generating motion vectors, which estimate motion for video blocks. A motion vector, for example, may indicate the displacement of a PU of a video block within a current video frame or picture relative to a predictive block within a reference frame (or other coded unit) relative to the current block being coded within the current frame (or other coded unit). A predictive block is a block that is found to closely match the block to be coded, in terms of pixel difference, which may be determined by sum of absolute difference (SAD), sum of square difference (SSD), or other difference metrics. In some examples, video encoder 28 may calculate values for sub-integer pixel positions of reference pictures stored in reference picture memory 65. For example, video encoder 28 may interpolate values of one-quarter pixel positions, one-eighth pixel positions, or other fractional pixel positions of the reference picture. Therefore, motion estimation unit 43 may perform a motion search relative to the full pixel positions and fractional pixel positions and output a motion vector with fractional pixel precision.

Motion estimation unit 43 calculates a motion vector for a PU of a video block in an inter-coded slice by comparing the position of the PU to the position of a predictive block of a reference picture. The reference picture may be selected from a first reference picture list (List 0) or a second reference picture list (List 1), each of which identify one or more reference pictures stored in reference picture memory 65. Motion estimation unit 43 sends the calculated motion vector to entropy encoding unit 57 and motion compensation unit 45.

Motion compensation, performed by motion compensation unit 45, may involve fetching or generating the predictive block based on the motion vector determined by motion estimation unit 43. Again, motion estimation unit 43 and motion compensation unit 45 may be functionally integrated, in some examples. Upon receiving the motion vector for the PU of the current video block, motion compensation unit 45 may locate the predictive block to which the motion vector points in one of the reference picture lists. Summer 51 forms a residual video block by subtracting pixel values of the predictive block from the pixel values of the current video block being coded, forming pixel difference values, as discussed below. In general, motion estimation unit 43 performs motion estimation relative to luma components, and motion compensation unit 45 uses motion vectors calculated based on the luma components for both chroma components and luma components. Mode select unit 41 may also generate syntax elements associated with the video blocks and the video slice for use by video decoder 48 in decoding the video blocks of the video slice.

Assuming that motion compensation unit 45 elects to perform merge mode, motion compensation unit 45 may form a candidate list including a set of merge candidates. Motion compensation unit 45 may add candidates to the candidate list based on a particular, predetermined order. Motion compensation unit 45 may also add additional candidates and perform pruning of the candidate list, as discussed above. Ultimately, mode select unit 41 may determine which of the candidates is to be used to encode motion information of the current block, and encode a merge index representing the selected candidate.

Intra-prediction unit 47 may intra-predict a current block, as an alternative to the inter-prediction performed by motion estimation unit 43 and motion compensation unit 45, as described above. In particular, intra-prediction unit 47 may determine an intra-prediction mode to use to encode a current block. In some examples, intra-prediction unit 47 may encode a current block using various intra-prediction modes, e.g., during separate encoding passes, and intra-prediction unit 47 (or mode select unit 41, in some examples) may select an appropriate intra-prediction mode to use from the tested modes.

For example, intra-prediction unit 47 may calculate rate-distortion values using a rate-distortion analysis for the various tested intra-prediction modes, and select the intra-prediction mode having the best rate-distortion characteristics among the tested modes. Rate-distortion analysis generally determines an amount of distortion (or error) between an encoded block and an original, unencoded block that was encoded to produce the encoded block, as well as a bit rate (that is, a number of bits) used to produce the encoded block. Intra-prediction unit 47 may calculate ratios from the distortions and rates for the various encoded blocks to determine which intra-prediction mode exhibits the best rate-distortion value for the block.

After selecting an intra-prediction mode for a block, intra-prediction unit 47 may provide information indicative of the selected intra-prediction mode for the block to entropy encoding unit 57. Entropy encoding unit 57 may encode the information indicating the selected intra-prediction mode. Video encoder 28 may include in the transmitted bitstream configuration data, which may include a plurality of intra-prediction mode index tables and a plurality of modified intra-prediction mode index tables (also referred to as codeword mapping tables), definitions of encoding contexts for various blocks, and indications of a most probable intra-prediction mode, an intra-prediction mode index table, and a modified intra-prediction mode index table to use for each of the contexts.

Video encoder 28 forms a residual video block by subtracting the prediction data from mode select unit 41 from the original video block being coded. Summer 51 represents the component or components that perform this subtraction operation. Transform processing unit 53 applies a transform, such as a discrete cosine transform (DCT) or a conceptually similar transform, to the residual block, producing a video block comprising residual transform coefficient values. Transform processing unit 53 may perform other transforms which are conceptually similar to DCT. Wavelet transforms, integer transforms, sub-band transforms or other types of transforms could also be used.

In any case, transform processing unit 53 applies the transform to the residual block, producing a block of residual transform coefficients. The transform may convert the residual information from a pixel value domain to a transform domain, such as a frequency domain. Transform processing unit 53 may send the resulting transform coefficients to quantization unit 55. Quantization unit 55 quantizes the transform coefficients to further reduce bit rate. The quantization process may reduce the bit depth associated with some or all of the coefficients. The degree of quantization may be modified by adjusting a quantization parameter. In some examples, quantization unit 55 may then perform a scan of the matrix including the quantized transform coefficients. Alternatively, entropy encoding unit 57 may perform the scan.

Following quantization, entropy encoding unit 57 entropy codes the quantized transform coefficients. For example, entropy encoding unit 57 may perform context adaptive variable length coding (CAVLC), context adaptive binary arithmetic coding (CABAC), syntax-based context-adaptive binary arithmetic coding (SBAC), probability interval partitioning entropy (PIPE) coding or another entropy coding technique. In the case of context-based entropy coding, context may be based on neighboring blocks. Following the entropy coding by entropy encoding unit 57, the encoded bitstream may be transmitted to another device (e.g., video decoder 48) or archived for later transmission or retrieval.

Inverse quantization unit 59 and inverse transform unit 61 apply inverse quantization and inverse transformation, respectively, to reconstruct the residual block in the pixel domain, e.g., for later use as a reference block. Motion compensation unit 45 may calculate a reference block by adding the residual block to a predictive block of one of the frames of reference picture memory 65. Motion compensation unit 45 may also apply one or more interpolation filters to the reconstructed residual block to calculate sub-integer pixel values for use in motion estimation. Summer 63 adds the reconstructed residual block to the motion compensated prediction block produced by motion compensation unit 45 to produce a reconstructed video block for storage in reference picture memory 65. The reconstructed video block may be used by motion estimation unit 43 and motion compensation unit 45 as a reference block to inter-code a block in a subsequent video frame.

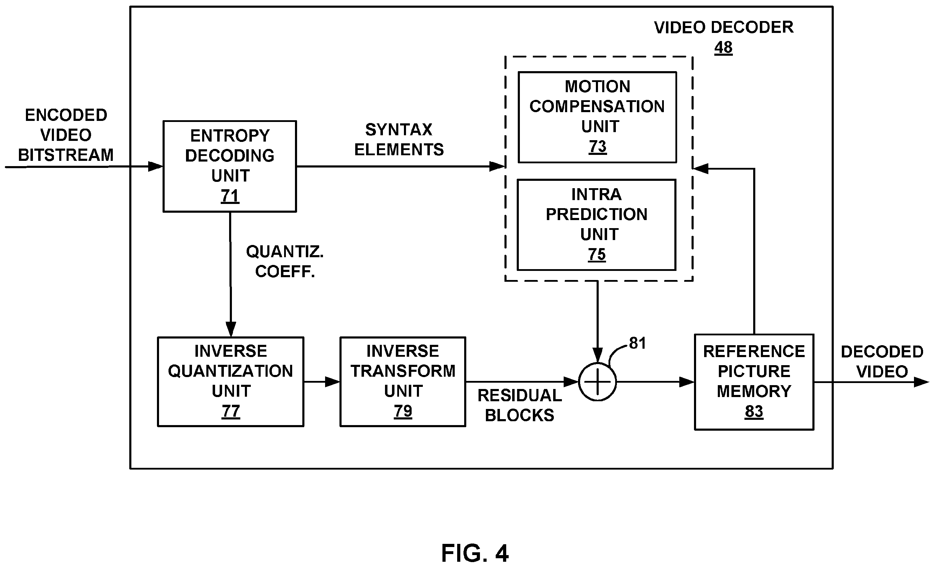

FIG. 4 is a block diagram illustrating an example of video decoder 48 that may be configured to perform the techniques of this disclosure. In the example of FIG. 4, video decoder 48 includes an entropy decoding unit 71, motion compensation unit 73, intra prediction unit 75, inverse quantization unit 77, inverse transformation unit 79, reference picture memory 83 and summer 81. Video decoder 48 may, in some examples, perform a decoding pass generally reciprocal to the encoding pass described with respect to video encoder 28 (FIG. 3). Motion compensation unit 73 may generate prediction data based on motion vectors received from entropy decoding unit 71, while intra-prediction unit 75 may generate prediction data based on intra-prediction mode indicators received from entropy decoding unit 71.

During the decoding process, video decoder 48 receives an encoded video bitstream that represents video blocks of an encoded video slice and associated syntax elements from video encoder 28. Entropy decoding unit 71 of video decoder 48 entropy decodes the bitstream to generate quantized coefficients, motion vectors or intra-prediction mode indicators, and other syntax elements. Entropy decoding unit 71 forwards the motion vectors to and other syntax elements to motion compensation unit 73. Video decoder 48 may receive the syntax elements at the video slice level and/or the video block level.

When the video slice is coded as an intra-coded (I) slice, intra prediction unit 75 may generate prediction data for a video block of the current video slice based on a signalled intra prediction mode and data from previously decoded blocks of the current frame or picture. When the video frame is coded as an inter-coded (i.e., B or P) slice, motion compensation unit 73 produces predictive blocks for a video block of the current video slice based on the motion vectors and other syntax elements received from entropy decoding unit 71. The predictive blocks may be produced from one of the reference pictures within one of the reference picture lists. Video decoder 48 may construct the reference frame lists, List 0 and List 1, using default construction techniques based on reference pictures stored in reference picture memory 83.

Motion compensation unit 73 determines prediction information for a video block of the current video slice by parsing the motion vectors and other syntax elements, and uses the prediction information to produce the predictive blocks for the current video block being decoded. For example, motion compensation unit 73 uses some of the received syntax elements to determine a prediction mode (e.g., intra- or inter-prediction) used to code the video blocks of the video slice, an inter-prediction slice type (e.g., B slice or P slice), construction information for one or more of the reference picture lists for the slice, motion vectors for each inter-encoded video block of the slice, inter-prediction status for each inter-coded video block of the slice, and other information to decode the video blocks in the current video slice.

Motion compensation unit 73 may also perform interpolation based on interpolation filters. Motion compensation unit 73 may use interpolation filters as used by video encoder 28 during encoding of the video blocks to calculate interpolated values for sub-integer pixels of reference blocks. In this case, motion compensation unit 73 may determine the interpolation filters used by video encoder 28 from the received syntax elements and use the interpolation filters to produce predictive blocks.

Assuming that the syntax elements indicate that merge mode is performed, motion compensation unit 73 may form a candidate list including a set of merge candidates. Motion compensation unit 73 may add candidates to the candidate list based on a particular, predetermined order. Motion compensation unit 73 may also add additional candidates and perform pruning of the candidate list, as discussed above. Ultimately, motion compensation unit 73 may decode a merge index representing which of the candidates is used to code motion information for the current block.

Inverse quantization unit 77 inverse quantizes, i.e., de-quantizes, quantized transform coefficients provided in the bitstream and entropy decoded by entropy decoding unit 71. The inverse quantization process may include use of a quantization parameter QP_{Y} calculated by video decoder 48 for each video block in the video slice to determine a degree of quantization and, likewise, a degree of inverse quantization that should be applied.

Inverse transform unit 79 applies an inverse transform, e.g., an inverse DCT, an inverse integer transform, or a conceptually similar inverse transform process, to the transform coefficients in order to produce residual blocks in the pixel domain.

After motion compensation unit 73 generates the predictive block for the current video block based on the motion vectors and other syntax elements, video decoder 48 forms a decoded video block by summing the residual blocks from inverse transform unit 79 with the corresponding predictive blocks generated by motion compensation unit 73. Summer 81 represents the component or components that perform this summation operation. If desired, a deblocking filter may also be applied to filter the decoded blocks in order to remove blockiness artifacts. Other loop filters (either in the coding loop or after the coding loop) may also be used to smooth pixel transitions, or otherwise improve the video quality. The decoded video blocks in a given frame or picture are then stored in reference picture memory 83, which stores reference pictures used for subsequent motion compensation. Reference picture memory 83 also stores decoded video for later presentation on a display device, such as display 27 of FIG. 2.

Techniques related to 360-degree (VR) video data will now be described, including techniques related to viewport dependent VR video systems. One example feature of VR video, compared to normal video, is that VR often uses a subset of the entire video region represented by the video pictures, corresponding to the current FOV that is displayed. In normal video applications, typically the entire video region is displayed. FOV is sometimes also referred to as viewport, i.e., the area currently being seen by the user. This feature may be utilized to improve the performance of VR video systems, e.g., by using viewport dependent projection mapping or viewport dependent video coding. The performance improvement can be either or both of lower transmission bandwidth and lower decoding complexity compared to conventional VR video systems under the same resolution/quality of the video part presented to the user.

Viewport dependent projection mapping may also be referred to as asymmetric projection mapping. One example is a sub-sampled cube-map. A typical cube-map consists of six equal-sized faces. In one example of a sub-sampled cube-map, one of the faces can be kept unchanged, while the face on the opposite side can be sub-sampled or down-scaled to a smaller size located at the center area of the original face shape, and other faces are geometrically scaled accordingly (still keeping the six faces). The extreme is to down-scale the face on the opposite side to be a single point, and thus the cube becomes a pyramid. In another example of sub-sampled cub-map, some faces are proportionally down-sized e.g., by a 2x2 ratio (i.e., 2:1 in each direction parallel to an edge of the face).

Such down-sized scaling can also be applied to different regions for other projection mappings such as equi-rectangular. One example is to down-size both the upper and bottom regions (i.e., the poles).

Viewport dependent video coding may also be referred to as viewport based partial video decoding. In viewport dependent coding, client device 40 may be configured to partially decode the entire encoded video region to provide sufficient information for display of the current FOV or viewport.

In one example of viewport dependent video coding, the VR video is coded using motion-constrained sets of tiles such that each potential region covering a FOV or viewport can be independently decoded from other regions. For a particular current FOV or viewport, the coded video data of the minimum set of independently decodable tiles that cover the current FOV or viewport is sent to the client, decoded, and displayed. A shortcoming of this approach is that when the user turns his or her head quickly to a new FOV that is not covered by the sent video data, nothing in the area not covered by the tiles of the video data can be seen before the data covering the new FOV arrives. This can easily happen unless the round trip time of the network is extremely low, e.g., at a magnitude of 10 ms, which is not feasible or at least a big challenge today or in the near future.

Another example of viewport dependent video coding was proposed in India Provisional Application No. 201641006779, filed February 26, 2016, and U.S. Patent Application No. 15/195,439, filed June 28, 2016 (U.S. Patent Publication No. 20170251204, published August 31, 2017), named independent multi-resolution coding (IMRC), wherein the spherical/panorama video is encoded at multiple different resolutions independently of each other, and each representation is coded using motion-constrained sets of tiles. The receiver chooses to decode different portions of the spherical/panorama video at different resolutions. Typically, the portion of the spherical video that is being currently observed by the user, i.e., the current FOV or the current viewport, is part of the video bitstream coded at the highest resolution. The region surrounding the current FOV is part of the video bitstream coded using a slightly lower resolution, and so on. The portion of the panorama directly behind the observer's head is part of the video bitstream coded at the lowest resolution. In case of a head movement by the user, the user experience may degrade only by a small amount in most cases, and the quality degradation may be most severe only in case of very large sudden head movement, which is rare.

In yet another example of viewport dependent video coding, video bitstreams of multiple-resolutions are scalable-coded using a scalable video codec such as SHVC. In addition, the entire bitstream of the lowest resolution video (or the base layer) is always sent. The lowest resolution video does not need to be coded using tiles or motion-constrained sets of tiles, though it would also work if it is coded using tiles or motion-constrained sets of tiles. For other aspects, the same strategy as described above is applied. This approach allows more efficient coding of the lowest resolution video because coding of tiles or tile motion-constrained sets of tiles reduces coding efficiency, and also more efficient coding of streams of higher resolutions due to the use of interlayer prediction. Furthermore, this approach also allows for more efficient FOV switching, because once FOV switching starts, the server or edge server can immediately stop sending video data that is from the video stream of a higher resolution (than the base layer) and that is not covering any region of the new FOV. If the video data of the lowest resolution covering the current FOV is not sent (i.e., only the video data of the highest resolution covering the current FOV is sent), during FOV switching, the server sometimes would have to continue sending video data that is from the video stream of a highest resolution and that is covering only the old FOV or part thereof, to be prepared such that the user can at least see the lowest-quality video in case he/she turns back to the old FOV or part thereof.

In some examples, what viewports or regions-of-interest are displayed to a user may be based on a director's guidance. In one example contribution, a use case was discussed on signalling and using of information that indicates a director's cut, such that the VR playback may display the dynamically changing viewport that a director wants the audience to focus on even when the user is not turning his/her head or changing the viewport through other UI. It was mentioned that such viewports may be provided with an omnidirectional video scene by scene.

For convenience of describing the drawbacks in the prior art, this disclosure defines the concept of most-interested regions (or preferred regions-of-interest/viewports) in the context of VR video as follows: a set of most-interested regions in a particular set of pictures of a VR video is defined as the set of regions that users are expected or recommended to see at the moment corresponding to the presentation times of set of pictures.

U.S. Patent Application No. 15/589,782, filed May 8, 2017 (U.S. Patent Publication No. 20170339415, published November 23, 2017), describes the generation of information on most-interested regions by user statistics by a service or content provider, e.g., through the statistics of which regions have been requested/seen the most by users when the VR video content was provided through a streaming service, wherein a most-interested region in a VR video picture is one of the regions that is statistically most likely rendered to the user at the presentation time of the picture. Also, described in U.S. Patent Application No. 15/589,782 is the use of information on most-interested regions for various VR performance-improving purposes, such as data pre-fetching in VR adaptive streaming by edge servers or clients, transcoding optimization when a VR video is transcoded, e.g., to a different codec or projection mapping, cache management by an edge server or cache, and content management by a VR video streaming server. Signalling of most-interested regions has also been disclosed, e.g., by using SEI messages in a video bitstream, a file format sample group in a media file, or dynamic adaptive streaming over HTTP (DASH) media presentation description (MPD) elements or attributes using a sample group.

Known designs on VR video applications are associated with at least the following problems:
1. Using the information on most-interested regions for displaying the most-interested regions without user control may lower VR video experience if the user is actually interested other regions in the VR video. Instead, the information on most-interested regions may be used in other ways for improved VR video experience.
2. The most-interested regions in a particular set of pictures of a VR video may be determined or created by other ways than director's cut.
3. There lacks a concrete way of signalling information on most-interested regions.

U.S. Patent Application No. 15/589,782 describes several techniques for signalling and reconstructing of one or more most-interested regions in VR video and corresponding processing in VR video encoding, decoding, streaming, and playback. One or more of these techniques may be applied independently, or in combination with others.

In a first example, the most-interested regions may be determined by the intent of the director or producer, or by user statistics by a service or content provider, e.g., through which regions have been requested/seen the most by users when the VR video content was provided through a streaming service.

In a second example, during video encoding or transcoding, the most-interested regions may be intentionally encoded with higher quality (e.g., by using lower quantization parameters), higher resolution (if different regions of the video pictures are sub-sampled with different sub-sampling ratios during video stitching or video encoding), or higher frequency of random accessibility than other regions.

In a third example, this disclosure proposes the signalling of the information on most-interested regions using SEI messages in a video bitstream, file format metadata in a media file, or dynamic adaptive streaming over HTTP (DASH) media presentation description (MPD) elements or attribute.

The information on most-interested regions for a particular set of pictures of a VR video bitstream may be signalled using an SEI message. An instance of this SEI message is specified to be applicable to the set of (one or more) pictures by syntax, semantics or both. The SEI message may contain at least the following syntax elements:
i.A syntax element indicating the number of most-interested regions.
ii.A loop of a set of syntax elements, each set describing the position and size of a most-interested region. For example, each set may include four syntax elements indicating the up, bottom, left and right offsets, in number of luma samples relative to the full picture, of the four corners of a rectangle that is a most-interested region. In another example, each set may include two syntax elements indicating the coordinate, in number of luma samples relative to the full picture, of the upper-left corner of a rectangle that is a most-interested region, and two syntax elements indicating the width and height of the rectangle.
iii.For each of the most-interested region, a priority may be indicated by a syntax element, with a high priority indicating a higher interest of the region.
iv.A syntax element indicating whether to cancel the effect of all earlier instances of this SEI message in decoding order.
v.A syntax element indicating whether the information in the current instances of this SEI message persists until the next picture in output order, or the start of a new coded video sequence, or the end of the bitstream.

The SEI message can be included as part of H.264/AVC, H.265/HEVC, or any other video codec specification. The NAL unit containing the SEI message can be directly included in 1) a file format box or structure for signalling of the information in file format, 2) an SDP field for signalling of the information in SDP, 3) a DASH MPD attribute or element for signalling of the information in DASH MPD, and/or 4) an MPEG-2 transport stream (TS) descriptor for signalling of the information in MPEG-2 TS.

The same information as described above may be directly carried in a file format data structure, e.g., by using a new sample group, or by inclusion in a timed metadata track.

The same information as described above may be directly carried using some new elements, attributes, and/or descriptors in a DASH MPD.

In a fourth example, during client-controlled video streaming such as DASH, when a content delivery network (CDN) is in use, an edge server (e.g., server device 60) or a cache may use the information on most-interested regions to obtain the video data of a higher-quality representation and covering the most-interested regions of the upcoming image slightly before receiving a request from client device 40, predicting that the video data would most likely be requested soon. The upcoming image may be the image that is immediately subsequent to the image that one or more regions of which have been recently sent to client device 40 and that are being presented or are soon to be presented by client device 40.

In a fifth example, during client-controlled video streaming such as DASH, client device 40 may use the information on most-interested regions to request the video data of a higher-quality representation and covering the most-interested regions of the upcoming image slightly before a user turns his/her head and sends the requests, predicting that the video data would most likely be requested soon. Again, the upcoming image may be an image that is immediately subsequent to the image that one or more regions of which have been recently sent to client device 40 and that are being presented or are soon to be presented by client device 40.

In a sixth example, a server-controlled video streaming system (e.g., server device 60) such as 3GPP packet-switched streaming (PSS) in 3GPP TS 26.234, may be configured with features that enable streaming clients (e.g., client device 40) to send feedback on a direction of a current FOV for the server to choose appropriate video data covering the most-interested regions to be sent. In such a configured server-controlled video streaming system, server device 60 may use the information on most-interested regions to send the video data of a higher-quality representation and covering the most-interested regions of an upcoming image slightly before receiving a streaming client's feedback on the direction of the current FOV, predicting that the video data would most likely need to be sent soon. For example, in response to determining that a particular streaming client is outputting a particular image, server device 60 may output, to the particular streaming client, video data of a higher-quality representation and covering the most-interested regions of an upcoming image that is immediately subsequent to the particular image.

In a seventh example, for storage management of content (e.g., VR content) that involves caching (e.g., at server device 60), server device 60 may determine which regions of a particular image to store in cache using data representative of one or more most-interested regions in the particular image. A developer may design a storage selection algorithm and server device 60 may execute the algorithm to give regions of an image a rank based on a selected degree of interest in the regions (e.g., based on a director's opinion) and/or based on a derived degree of interest in the region (e.g., based on user statistic of watching behavior after the content has been available for some time). Server device 60 may store, in the cache, video data for the regions of the particular image with a rank value that satisfies a threshold (e.g., is greater than the threshold). For example, when only the rank values for the most-interested regions of the particular image satisfy the threshold, server device 60 may store only video data for the most-interested regions of the particular image in the cache. In this example, client device 40 may retrieve video data for the most-interested regions of the particular image from the cache and may retrieve video data for other regions of the particular image from a main server storage, which may be positioned further from users than the cache. Additionally, or alternatively, server device 60 may dynamically determine the threshold based on the amount of available space in the cache.

In an eight example, for long-term storage of VR content, server device 60 may use data representative of one or more most-interested regions in a particular image (e.g., of a VR video) to decide which regions of the image to store. A developer may design a storage selection algorithm and server device 60 may execute the algorithm to give regions a rank based on a selected degree of interest in the regions (e.g., based on a director's opinion) and/or based on a derived degree of interest in the region (e.g., based on user statistics of watching behavior after the content has been available for some time). Server device 60 may store, in long-term storage (e.g., configured to store video data for weeks, months, years, etc.), video data for the regions of the particular image with a rank value that satisfies a threshold (e.g., is greater than the threshold). For example, when only the rank values for the most-interested regions of the particular image satisfy the threshold, server device 60 may store only video data for the most-interested regions of the particular image in the long-term storage and remove video data for other regions of the particular image from the long-term storage.

It is to be recognized that depending on the example, certain acts or events of any of the techniques described herein can be performed in a different sequence, may be added, merged, or left out altogether (e.g., not all described acts or events are necessary for the practice of the techniques). Moreover, in certain examples, acts or events may be performed concurrently, e.g., through multi-threaded processing, interrupt processing, or multiple processors, rather than sequentially.

U.S. Patent Application No. 15/591,805, filed May 10, 2017 (U.S. Patent Publication No. 20170344843, published Nov. 30, 2017), describes several techniques for advanced signalling of one or more most-interested regions in VR video, including the following, among others:
- A sample group, when included in a track fragment box, can document information of samples that are in subsequent track fragments following the one that contains the sample group (the SampleToGroupBox of the grouping type and the corresponding sample group description box) in the track;
- Some detailed embodiments of the sample group mentioned above;
- Signalling of most-interested regions directly using tile ID as specified in HEVC, groupID as defined in ISO/IEC 14496-15, track ID as defined in ISO/IEC 14496-12, or DASH representation ID as defined in ISO/IEC 23009-1.

Example designs for signalling information on most-interested regions of VR video may have some potential problems. As one example, no mechanism was available to ensure that information on most-interested regions of VR video can be received by an adaptive streaming client or edge server before the video pictures that the information is about. When included in an SEI message, as described in U.S. Patent Application No. 15/589,782, the information would come together with the coded pictures the information is about. When included in a track fragment, a file format sample group describes information about the video samples in that track fragment. As another example, in some cases, e.g., when tile tracks are used for carrying motion-constrained tiles or tile regions, it is not necessary to signal information on most-interested regions through the positions and sizes of the regions, but rather simpler and more efficient signalling can be used.

U.S. Patent Application No. 15/591,805 describes several techniques for advanced signalling of one or more most-interested region in VR video, such that information on most-interested regions of VR video can be received by an adaptive streaming client or edge server before the video pictures that the information is about. One or more of these techniques may be applied independently, or in combination with others.

In one example, it is proposed that a sample group, when included in a track fragment box, can document information of samples that are in subsequent track fragments following the one that contains the sample group (the SampleToGroupBox of the grouping type and the corresponding sample group description box) in the track. For example, a new version of the SampleToGroupBox is defined, and when the SampleToGroupBox of a particular grouping type is included in a track fragment, it is required that the new version of the SampleToGroupBox is used, and the information included in the corresponding sample group entry of the same grouping type can document information of samples in subsequent track fragments that contain the sample group in the track.

In another example, the sample group for describing the most-interested region may at least contain one or more of the following syntax elements.

The sample group may contain a syntax element indicating the number of most-interested regions.

The sample group may contain a loop of a set of syntax elements, each set describing the position and size of a most-interested region. For example, each set may include four syntax elements indicating the up, bottom, left and right offsets, in number of luma samples relative to the full picture, of the four corners of a rectangle that is a most-interested region. For each of the most-interested regions, a priority may be indicated by a syntax element, with a high priority indicating a higher interest of the region.

In one example, each set may include two syntax elements indicating the coordinate, in number of luma samples in relative to the full picture, of the upper-left corner of a rectangle that is a most-interested region, and two syntax elements indicating the width and height of the rectangle.

In the second example, each set may include two syntax elements indicating the coordinate, in number of luma samples relative to the full picture, of the upper-left corner of a most-interested region. Note that the most-interested region pointed at by such coordinate may not be of rectangle shape. File parsers should be able to associate the coordinate with a region in a viewport and find the track / DASH representation in which such region is coded with the highest resolution / quality.

In the third example, the first and the second alternative can be merged in which a flag is introduced to indicate whether the most-interested region is of rectangle shape which is described by width and height.

In the fourth example, each set may include three syntax elements (e.g., the yaw degree, pitch degree and radius length) indicating the coordinate, in number of luma samples in relative to the sphere, of the upper-left corner of a rectangle that is a most-interested region, and two syntax elements indicating the width of pitch and height yaw of the rectangle. File parsers should be able to associate the described region in a sphere with a region relative to the full picture and find the track / DASH representation in which such region is coded with the highest resolution / quality.

In another example, instead of directly signaling the position and size of a most-interested region, the tile IDs, as specified in the HEVC specification, of the tiles covering a most-interested region may be signalled.

In another example, instead of directly signal the position and size of a most-interested region, the tile region IDs or group IDs, as defined in clause 10 of ISO/IEC 14496-15, of the tile regions covering a most-interested region may be signalled.

In another example, when tile tracks as defined in clause 10 of ISO/IEC 14496-15 are used, instead of directly signaling the position and size of a most-interested region, the track IDs of the tracks carrying the motion-constrained tiles or tile regions that cover a most-interested region may be signalled.

In another example when DASH is used for streaming the VR video, tile tracks as defined in clause 10 of ISO/IEC 14496-15 are used, and each tile track is encapsulated in one DASH representation, instead of directly signaling the position and size of a most-interested region, in the MPD or an update of the MPD, the representation IDs of the representations corresponding to the tracks carrying the motion-constrained tiles or tile regions that cover a most-interested region may be signalled.

In another example, when tile tracks as defined in defined in clause 10 of ISO/IEC 14496-15 are used, the information of the one or more most-interested regions may be signalled in the base tile track or non-tiled track (i.e., the track that is referred to by other tracks through 'TBAS' track reference), or may be signalled only in the base tile track. In this case, when a sample group is used for the signalling, the sample numbers are those of the tile tracks associated with the current track. And in this case, it may be required that the number of samples the tile tracks are the same, and the sample numbers of the tile tracks are aligned.

In another example, instead of using a sample group, the information of most-interested regions may also be signalled in a new box that is included, directly or indirectly, in the sample table box, the track fragment box, and/or the segment index box, and it is allowed for the new box to document information about samples of subsequent track fragments or subsequent segments following the one that contains the new box in the track.

In another example, the information on most-interested regions for a particular set of pictures of a VR video bitstream may be signalled using an SEI message. An instance of this SEI message is specified to be applicable to the set of (one or more) pictures by syntax, semantics or both. The SEI message may contain one or more of the following syntax elements.

The SEI message may contain a syntax element indicating the number of most-interested regions.

The SEI message may contain a loop of a set of syntax elements, each set describing the position and size of a most-interested region. For example, each set may include four syntax elements indicating the up, bottom, left and right offsets, in number of luma samples relative to the full picture, of the four corners of a rectangle that is a most-interested region. Alternatively, each set may include two syntax elements indicating the coordinate, in number of luma samples relative to the full picture, of the upper-left corner of a rectangle that is a most-interested region, and two syntax elements indicating the width and height of the rectangle.

The SEI message may contain, for each of the most-interested region, a priority may be indicated by a syntax element, with a high priority indicating a higher interest of the region.

The SEI message may contain a syntax element indicating whether to cancel the effect of all earlier instances of this SEI message in decoding order.

The SEI message may contain a syntax element indicating a future picture or access unit in output order, from which the information on most-interested regions described by this SEI message starts to apply. This indication can be implemented as a delta POC (picture order count), that is relative to the POC of the picture or access unit associated with the SEI message, or a delta of the output time.

The SEI message may contain a syntax element indicating whether the information in the current instances of this SEI message persists until the next picture in output order, or the start of a new coded video sequence, or the end of the bitstream.

A detailed example of the sample group is as follows.

A new sample group is designed for signalling of the most-interested regions of VR video. The sample grouping type is 'mir '.

The most-interested regions sample group documents the most-interested regions of a VR video represented in file. The most-interested regions may be determined by the intent of the director or producer, or by user statistics by a service or content provider, e.g., through the statistics of which regions have been requested/seen the most by users when the VR video content was provided through a streaming service. A most-interested region in a VR video picture is one of the regions that is statistically most likely rendered to the user at the presentation time of the picture.

NOTE: The information of most-interested regions may be used for data pre-fetching in VR adaptive streaming by edge servers or clients and/or transcoding optimization when a VR video is transcoded, e.g., to a different codec, projection mapping.

When the SampleToGroupBox with grouping type equal to 'mir ' is included in a Track Fragment Box ('traf), the version of the SampleToGroupBox shall be equal to 2.

Version 2 of the SampleToGroupBox allows the samples documented in SampleToGroupBox to refer to the samples contained in one or more subsequent track fragments. In other words, when the version is 2 for the SampleToGroupBox, it is not an error for the total sample count in this box to be greater than the total number of samples in the current track fragment box, but it is an error for the total sample count in this box to be greater than the total number of samples in all track fragments starting from the current track fragment in the track, and in that case the reader behavior would be undefined.

The syntax of the sample group entry is as follows:

```
 class MostInterestedRegions() extends VisualSampleGroupEntry ('mir') {
       unsigned int(16) entry_count;
       for (i=1; i<= entry_count; i++) {
               unsigned int(16) left_horizontal_offset;
               unsigned int(16) top_vertical_offset;
               unsigned int(16) region_width;
               unsigned int(16) region_height;
       }
 }
```

The semantics are as follows:
entry count specifies the number of entries in the sample group entry.
left_horizontal_offset, top vertical offset, region width, and region height are integer values that indicate the position and size of the most-interested region. left_horizontal_offset and top_vertical_offset indicate the horizontal and vertical coordinates, respectively, in luma samples, of the upper left corner of the most-interested region in the coded pictures to which this sample group entry applies. region width and region height indicate the width and height, respectively, in luma samples, of the most-interested region in the coded pictures to which this sample group entry applies.

Alternatively, the semantics of left_horizontal_offset, top_vertical_offset, region width, and region height are as follows:
left_horizontal_offset, top vertical offset, region width, and region height are integer values that indicate the position and size of the most-interested region. left_horizontal_offset and top_vertical_offset indicate the horizontal and vertical coordinates, respectively, in luma samples, of the upper left corner of the most-interested region in the coded pictures that this sample group entry applies to and that have the highest resolution among all the alternative tracks. region_width and region_height indicate the width and height, respectively, in luma samples, of the most-interested region in the coded pictures pictures that this sample group entry applies to and that have the highest resolution among all the alternative tracks.

Alternatively, the syntax of the sample group entry is as follows:

```
 class MostInterestedRegions() extends VisualSampleGroupEntry ('mir') {
                   unsigned int(32) regionbase_track_id;
                   unsigned int(16) entry_count;
                   for (i=1; i<= entry_count; i++) {
                      unsigned int(16) left_horizontal_offset;
                      unsigned int(16) top_vertical_offset;
                      unsigned int(16) region width;
                      unsigned int(16) region height;
                   }
 }
```

And the semantics are as follows:
regionbase_track_id specifies the track for specification of the base region against which the positions and sizes of the most-interested regions are specified. Let the samples that are in the current track and that this sample group entry applies to be the target samples. The samples that are in the track with track_id equal to regionbase_track_id and have the same sample numbers as the target samples as the collocated samples. The base region is the entire region of the pictures that are entirely or partially represented by the coded video data carried in collocated samples.
entry count specifies the number of entries in the sample group entry.
left_horizontal_offset, top_vertical_offset, region width, and region height are integer values that indicate the position and size of the most-interested region. left_horizontal_offset and top_vertical_offset indicate the horizontal and vertical coordinates, respectively, in luma samples, of the upper left corner of the most-interested region in relative to the base region. region width and region height indicate the width and height, respectively, in luma samples, of the most-interested region in relative to the base region.

An ROI in VR/360-degree video may be defined by at least two ways. One way to define an RIO in VR/360-degree video is to define the ROI based on the sphere coordinate system, e.g., by defining a region on the spherical surface of the 360-degree video. Another way is to define an ROI based on the 2D Cartesian coordinate system on a 2D picture. The latter is what was used in the techniques of U.S. Provisional Application No. 62/339,009 (U.S. Publication No. 2017033941, published November 23, 2017), and U.S. Provisional Application No. 62/341,017 (U.S. Publication No. 20170344843, published November 30, 2017).

One example contribution for VR video discusses several methods for defining regions of interest based on the sphere coordinate system. Specifically, these methods specify a region on a spherical surface that is enclosed by the four segments of either four great circles or two great circles and two small circles, each segment between two points on the spherical surface. Herein a circle, great circle, and small circle are defined as follows:
The intersection of plane and a sphere is a circle (except when the intersection is a point). All the points of this circle belong to the surface of the sphere. A great circle, also known as an orthodrome or Riemannian circle, of a sphere is the intersection of the sphere and a plane that passes through the center point of the sphere. The center of the sphere and the center of a great circle are always co-located. Any other intersection of a plane and a sphere that does not meet this condition and that is not a point is a small circle.

When a VR/360-degree video is played back on a head mounted display (HMD) or a non-HMD display such as a TV, a viewport is rendered (e.g., decoded and displayed) to the user. Typically, a viewport is a rectangular region on a plane that is tangent to a sphere (i.e., intersects with the sphere at one point), where the viewport plane is orthogonal to the user's viewing direction. A viewport can be generated by applying the rectilinear projection, e.g., as discussed in Boyce, et al. "JVET common test conditions and evaluation procedures for 360-degree video," Joint Video Exploration Team (JVET), of ITU-T SG 16 WP 3 and ISO/IEC JTC 1/SC 29/WG 11, 4th Meeting: Chengdu, CN, 15-21 October 2016 (JVET-D1030). The region on the sphere that corresponds to a viewport is the one that is enclosed by the four segments of four great circles.

Given a signalled region-of-interest or viewport in a VR video, e.g., an indicated most-interested region as a part of a director's cut, for the best user experience from the content generator's point of view, it may be preferred that the entire signalled region-of-interest or viewport is rendered to the user without cropping away any part of the signalled region. However, depending on the properties of display 27 of client device 40, sometimes some adjustments may be needed in rendering of the signalled region-of-interest or viewport to fit display 27.

In the context of this disclosure, rendering may include one or more of decoding video data, graphics processing the preferred regions-of-interest or viewports to be displayed, display processing of the preferred regions-of-interest or viewports to be displayed, and/or displaying of the preferred regions-of-interest or viewports. Rendering may be performed by one or more of display processor 25, video decoder 48, processor 21, and/or GPU 23. In some examples, the aspect ratio (i.e., the ratio between the width and height) of the signalled preferred regions-of-interest or viewports may need to be adjusted because display 27 has a different aspect ratio than the preferred regions-of-interest or viewports. In other examples, some parts of the VR video adjacent to the signalled preferred regions-of-interest or viewports may need also to be rendered to fit the size and the aspect ratio of the display. In other examples, it might be preferred to crop away some part of the signalled preferred regions-of-interest or viewports. As another example, the signalled preferred regions-of-interest or viewports may have a changing resolution across time, and in this case, zooming in or out may be performed during rendering. In this case, one or more of the adjustments described above may be needed.

A director or creator of the VR video may have different intents or preferences on how and what adjustments should be made to the preferred regions-of-interest or viewports in different scenarios. In some examples, it may be preferred that the aspect ratio of the signalled preferred regions-of-interest or viewports is kept unchanged. In such examples, keeping the aspect ratio of the preferred regions-of-interest or viewports should have a higher priority than minimizing the rendered parts that are not covered by the signalled preferred regions-of-interest or viewports, and vice versa.

In many cases, it is preferred that the aspect ratio of the signalled preferred regions-of-interest or viewports is maintained to avoid deformations of the preferred regions-of-interest or viewports by the renderer (e.g., GPU 23) to fit the aspect ratio of display 27. This can be achieved by cropping the ROI to fit the display, resulting in some loss of content, or by rendering parts that are adjacent to the ROI, resulting in additional content being displayed, or by adding banners to the ROI. A banner may be any rendered image or images to fill any space of the FOV not completely filled by the signalled ROI or viewport. For example, a banner may be a black bar. However, there is currently no mechanism for signalling of such preferred or prioritized rendering operations.

This disclosure describes example techniques for signalling of preferred or prioritized rendering operations for signalled preferred regions-of-interest or viewports in VR video, as described below. Content preparation device 20 (FIG. 1) may be configured to implement the techniques of this disclosure. Any of video encoder 28, processor 15, and/or GPU 19 may be configured to implement one or more techniques of this disclosure. In addition, client device 40 may be configured to decode, parse, render, and display VR video data signalled in accordance with the techniques of this disclosure. Any of display processor 25, video decoder 48, processor 21, and/or GPU 23 may be configured to implement the techniques of this disclosure.

In one example of the disclosure, content preparation device 20 may be configured to signal, for the signalled preferred regions-of-interest or viewports, an additional indication that indicates a preferred rendering operation in case some adjustment is needed to fit the display when rendering the signalled ROI or viewport. As described above, content preparation device 20 may be configured to generate one or more first syntax elements that indicate the preferred regions-of-interest or viewports. In addition, content preparation device 20 may be configured to generate one or more second syntax elements that indicate the preferred rendering operations for the preferred regions-of-interest or viewports.

Client device 40 may be configured to render the preferred regions-of-interest or viewports in accordance with the signalled indication (e.g., the second syntax elements). That is, client device 40 may be configured to parse the indication (e.g., the second syntax elements) that specifies the preferred rendering operation and then perform the preferred rendering operation. In one example, client device 40 may fit the signalled preferred regions-of-interest or viewports to display 27 in accordance with the preferred rendering operation.

In another example, content preparation device 20 may be configured to signal an indication that it is preferred to keep the aspect ratio of the signalled preferred regions-of-interest or viewports unchanged rather than minimizing the rendered parts that are not covered by the signalled preferred regions-of-interest or viewports. Client device 40 may be configured to parse the indication that specifies the preference to keep the aspect ratio and not perform any aspect ratio adjustments of the preferred regions-of-interest or viewports.

In another example, content preparation device 20 may be configured to signal an indication that it is preferred to minimize the rendered parts that are not covered by the signalled preferred regions-of-interest or viewports rather than keeping the aspect ratio of the signalled preferred regions-of-interest or viewports unchanged. Client device 40 may be configured to parse the indication that specifies the preference to minimize the rendered parts and then crop and/or process the VR video such that the rendered parts that are not part of the preferred regions-of-interest or viewports are not displayed.

In another example, content preparation device 20 may be configured to signal an indication that it is preferred to keep the aspect ratio of the signalled preferred regions-of-interest or viewports unchanged and to minimize the rendered parts that are not covered by the signalled preferred regions-of-interest or viewports by cropping the preferred regions-of-interest or viewports to fit the aspect ratio of display 27. Client device 40 may be configured to parse the indication and to crop the preferred regions-of-interest or viewports to fit the aspect ratio of display 27 without changing the aspect ratio of the signalled preferred regions-of-interest or viewports.

In another example, content preparation device 20 may be configured to signal an indication that it is preferred to keep the aspect ratio of the signalled preferred regions-of-interest or viewports unchanged and to minimize the rendered parts that are not covered by the signalled preferred regions-of-interest or viewports by rendering adjacent regions to fit the aspect ratio of display 27. Client device 40 may be configured to parse the indication and to render adjacent regions to fit the aspect ratio of the display without changing the aspect ratio of the signalled preferred regions-of-interest or viewports.

In another example, content preparation device 20 may be configured to signal an indication that it is preferred to keep the aspect ratio of the signalled preferred regions-of-interest or viewports unchanged and minimize the rendered parts that are not covered by the signalled preferred regions-of-interest or viewports by adding banners to the preferred regions-of-interest or viewports to fit the aspect ratio of display 27. Client device 40 may be configured to parse the indication and to add banners to the preferred regions-of-interest or viewports to fit the aspect ratio of the display without changing the aspect ratio of the signalled preferred regions-of-interest or viewports.

In another example, content preparation device 20 may be configured to signal an indication that the aspect ratio of the signaled preferred regions-of-interest or viewports may be modified by non-linear warping techniques to fit the aspect ratio of display 27. Client device 40 may be configured to parse the indication and to modify the aspect ratio of the signaled preferred regions-of-interest or viewports using non-linear warping techniques to fit the aspect ratio of display 27.

Each of the aforementioned techniques may be used together or in any combination. For example, content preparation device 20 and client device 40 may be configured to implement each of the techniques described above, and each of content preparation device 20 and client device 40 may be configured to selectively apply the aforementioned techniques for each frame (e.g., FOV) of a picture.

The indications (e.g., first and second syntax elements) described above may signalled in any acceptable syntax structures, including in one or more parameter sets, supplemental enhancement information (SEI) messages, or in any syntax of file format (e.g., a sample group).

As a specific example, the indications of the preferred rendering operations may be a preferred_rendering_operation syntax element that is signaled in an omnidirectional viewport SEI message. The value of the preferred_rendering_operation syntax element indicates the preferred rendering operation for the recommended viewport (e.g., preferred regions-of-interest or viewports) to keep the aspect ratio of the viewport region and minimize the rendered parts that are not covered by the viewport after a possible spatial resolution scaling operation. A value of the preferred rendering operation syntax element indicates one of an unspecified rendering preference (e.g., value 0), rendering adjacent regions of the preferred regions-of-interest or preferred viewports (e.g., value 1), adding banners around the preferred regions-of-interest or preferred viewports (e.g., value 2), or cropping the preferred regions-of-interest or preferred viewports (e.g., value 3).

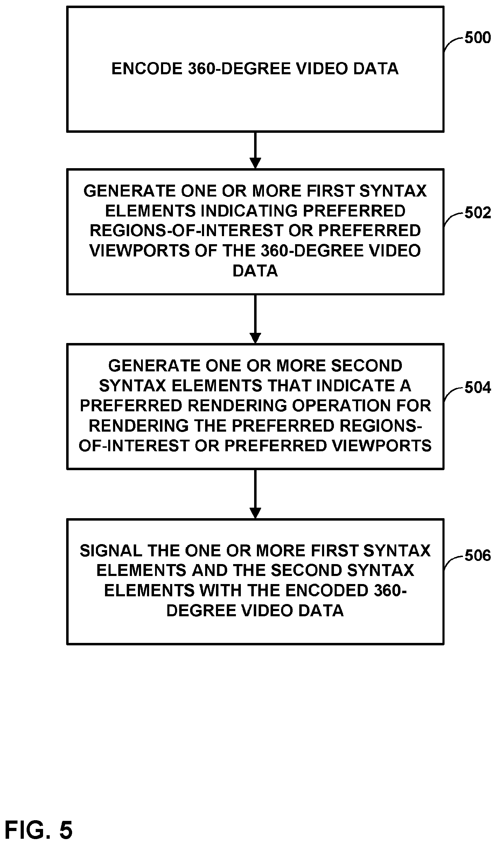

FIG. 5 is a flowchart illustrating an example method of the disclosure. Content preparation device 20 may be configured to perform the methods of FIG. 5.

Content preparation device 20 may be configured to encode 360-degree video data (500), generate one or more first syntax elements indicating preferred regions-of-interest or preferred viewports of the 360-degree video data (502), generate one or more second syntax elements that indicate a preferred rendering operation for rendering the preferred regions-of-interest or preferred viewports (504), and signal the one or more first syntax elements and the one or more second syntax elements with the encoded 360-degree video data (506). In one example, content preparation device 20 may further be configured to determine the preferred regions-of-interest or preferred viewports of the 360-degree video data.

In one example, the one or more second syntax elements include an indication that the preferred rendering operation includes rendering the preferred regions-of-interest or preferred viewports without changing an aspect ratio of the preferred regions-of-interest or preferred viewports.

In another example, the one or more second syntax elements include an indication that the preferred rendering operation includes rendering the preferred regions-of-interest or preferred viewports by minimizing rendered parts of the 360-degree video data that are not covered by the preferred regions-of-interest or preferred viewports.

In another example, the one or more second syntax elements include an indication that the preferred rendering operation includes rendering the preferred regions-of-interest or preferred viewports by keeping an aspect ratio of the preferred regions-of-interest or preferred viewports unchanged and minimizing rendered parts of the 360-degree video data that are not covered by the preferred regions-of-interest or preferred viewports by cropping the preferred regions-of-interest or preferred viewports to fit an aspect ratio of a display.

In another example, the one or more second syntax elements include an indication that the preferred rendering operation includes rendering the preferred regions-of-interest or preferred viewports by keeping an aspect ratio of the preferred regions-of-interest or preferred viewports unchanged and minimizing rendered parts of the 360-degree video data that are not covered by the preferred regions-of-interest or preferred viewports by rendering adjacent regions of the 360-degree video to fit an aspect ratio of a display.

In another example, the one or more second syntax elements include an indication that the preferred rendering operation includes rendering the preferred regions-of-interest or preferred viewports by keeping an aspect ratio of the preferred regions-of-interest or preferred viewports unchanged and minimizing rendered parts of the 360-degree video data that are not covered by the preferred regions-of-interest or preferred viewports by adding banners to the preferred regions-of-interest or preferred viewports to fit an aspect ratio of a display.

In another example, the one or more second syntax elements include an indication that the preferred rendering operation includes rendering the preferred regions-of-interest or preferred viewports by modifying an aspect ratio of the preferred regions-of-interest or preferred viewports using non-linear warping techniques to fit an aspect ratio of a display.

In another example, generating the one or more second syntax elements comprises generating a preferred_rendering_operation syntax element in an omnidirectional viewport supplemental enhancement information (SEI) message, wherein respective values of the preferred_rendering_operation syntax element indicates one of an unspecified rendering preference, rendering adjacent regions of the preferred regions-of-interest or preferred viewports, adding banners around the preferred regions-of-interest or preferred viewports, or cropping the preferred regions-of-interest or preferred viewports.

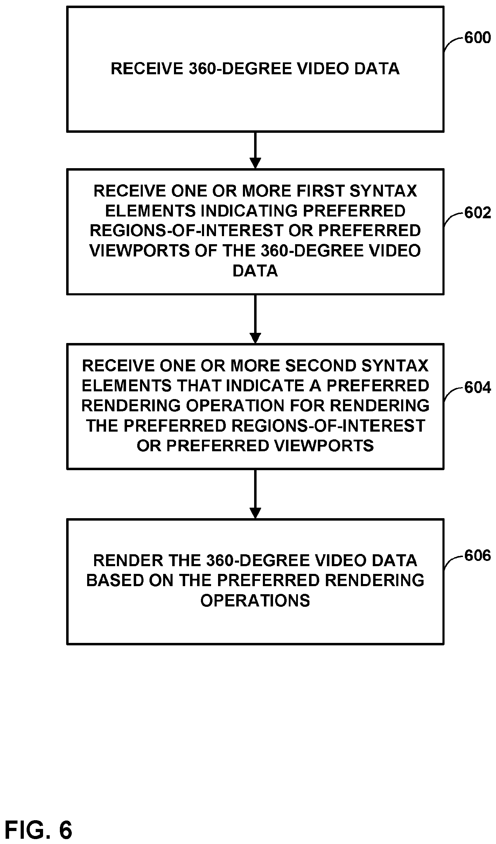

FIG. 6 is a flowchart illustrating an example method of the disclosure. Client device 40 may be configured to perform the methods of FIG. 6.

Client device 40 may be configured to receive 360-degree video data (600), receive one or more first syntax elements indicating preferred regions-of-interest or preferred viewports of the 360-degree video data (602), receive one or more second syntax elements that indicate a preferred rendering operation for rendering the preferred regions-of-interest or preferred viewports (604), and render the 360-degree video data based on the preferred rendering operations (606). Client device 40 may be further configured to decode the 360-degree video data.

In one example, the one or more second syntax elements include an indication that the preferred rendering operation includes rendering the preferred regions-of-interest or preferred viewports without changing an aspect ratio of the preferred regions-of-interest or preferred viewports, and rendering the 360-degree video data comprises rendering the 360-degree video data by rendering the preferred regions-of-interest or preferred viewports without changing the aspect ratio of the preferred regions-of-interest or preferred viewports.

In another example, the one or more second syntax elements include an indication that the preferred rendering operation includes rendering the preferred regions-of-interest or preferred viewports by minimizing rendered parts of the 360-degree video data that are not covered by the preferred regions-of-interest or preferred viewports, and rendering the 360-degree video data comprises rendering the 360-degree video data by rendering the preferred regions-of-interest or preferred viewports by minimizing rendered parts of the 360-degree video data that are not covered by the preferred regions-of-interest or preferred viewports.

In another example, the one or more second syntax elements include an indication that the preferred rendering operation includes rendering the preferred regions-of-interest or preferred viewports by keeping an aspect ratio of the preferred regions-of-interest or preferred viewports unchanged and minimizing rendered parts of the 360-degree video data that are not covered by the preferred regions-of-interest or preferred viewports by cropping the preferred regions-of-interest or preferred viewports to fit an aspect ratio of a display, and rendering the 360-degree video data comprises rendering the 360-degree video data by keeping the aspect ratio of the preferred regions-of-interest or preferred viewports unchanged and minimizing rendered parts of the 360-degree video data that are not covered by the preferred regions-of-interest or preferred viewports by cropping the preferred regions-of-interest or preferred viewports to fit the aspect ratio of the display.

In another example, the one or more second syntax elements include an indication that the preferred rendering operation includes rendering the preferred regions-of-interest or preferred viewports by keeping an aspect ratio of the preferred regions-of-interest or preferred viewports unchanged and minimizing rendered parts of the 360-degree video data that are not covered by the preferred regions-of-interest or preferred viewports by rendering adjacent regions of the 360-degree video to fit an aspect ratio of a display, and rendering the 360-degree video data comprises rendering the 360-degree video data by keeping the aspect ratio of the preferred regions-of-interest or preferred viewports unchanged and minimizing rendered parts of the 360-degree video data that are not covered by the preferred regions-of-interest or preferred viewports by rendering adjacent regions of the 360-degree video to fit the aspect ratio of the display.

In another example, the one or more second syntax elements include an indication that the preferred rendering operation includes rendering the preferred regions-of-interest or preferred viewports by keeping an aspect ratio of the preferred regions-of-interest or preferred viewports unchanged and minimizing rendered parts of the 360-degree video data that are not covered by the preferred regions-of-interest or preferred viewports by adding banners to the preferred regions-of-interest or preferred viewports to fit an aspect ratio of a display, and rendering the 360-degree video data comprises rendering the 360-degree video data by keeping the aspect ratio of the preferred regions-of-interest or preferred viewports unchanged and minimizing rendered parts of the 360-degree video data that are not covered by the preferred regions-of-interest or preferred viewports by adding banners to the preferred regions-of-interest or preferred viewports to fit the aspect ratio of the display.

In another example, the one or more second syntax elements include an indication that the preferred rendering operation includes rendering the preferred regions-of-interest or preferred viewports by modifying an aspect ratio of the preferred regions-of-interest or preferred viewports using non-linear warping techniques to fit an aspect ratio of a display, and rendering the 360-degree video data comprises rendering the 360-degree video data by modifying the aspect ratio of the preferred regions-of-interest or preferred viewports using non-linear warping techniques to fit the aspect ratio of the display.

In another example, receiving the one or more second syntax elements comprises receiving a preferred_rendering_operation syntax element in an omnidirectional viewport supplemental enhancement information (SEI) message, wherein a value of the preferred_rendering_operation syntax element indicates one of an unspecified rendering preference, rendering adjacent regions of the preferred regions-of-interest or preferred viewports, adding banners around the preferred regions-of-interest or preferred viewports, or cropping the preferred regions-of-interest or preferred viewports.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit such as fixed-function processing circuitry, programmable processing circuitry or a combination of both. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some examples, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

## Claims

1. A method of processing video data, the method comprising:
receiving (600) 360-degree video data;
receiving (602) one or more first syntax elements indicating preferred regions-of-interest or preferred viewports of the 360-degree video data;
receiving (604) one or more second syntax elements that indicate a preferred rendering operation for rendering the preferred regions-of-interest or preferred viewports, wherein the preferred rendering operation renders the preferred regions-of-interest based on an aspect ratio of a display or renders the preferred viewports based on the aspect ratio of the display and **characterised by** the one or more second syntax elements include an indication that the preferred rendering operation includes rendering the preferred regions-of-interest or preferred viewports by modifying an aspect ratio of the preferred regions-of-interest or preferred viewports using non-linear warping to fit an aspect ratio of the display; and
rendering (606) the 360-degree video data based on the preferred rendering operation.

2. The method of claim 1, further comprising:
decoding the received 360-degree video data.

3. The method of claim 1, wherein the one or more second syntax elements include an indication that the preferred rendering operation includes rendering the preferred regions-of-interest or preferred viewports without changing an aspect ratio of the preferred regions-of-interest or preferred viewports, and
wherein rendering the 360-degree video data rendering the preferred regions-of-interest or preferred viewports without changing the aspect ratio of the preferred regions-of-interest or preferred viewports.

4. The method of claim 1, wherein the one or more second syntax elements include an indication that the preferred rendering operation includes rendering the preferred regions-of-interest or preferred viewports by minimizing rendered parts of the 360-degree video data that are not covered by the preferred regions-of-interest or preferred viewports, and
wherein rendering the 360-degree video data comprises rendering the preferred regions-of-interest or preferred viewports by minimizing rendered parts of the 360-degree video data that are not covered by the preferred regions-of-interest or preferred viewports.

5. The method of claim 1, wherein the one or more second syntax elements include an indication that the preferred rendering operation includes rendering the preferred regions-of-interest or preferred viewports by keeping an aspect ratio of the preferred regions-of-interest or preferred viewports unchanged and minimizing rendered parts of the 360-degree video data that are not covered by the preferred regions-of-interest or preferred viewports by cropping the preferred regions-of-interest or preferred viewports to fit an aspect ratio of a display, and
wherein rendering the 360-degree video data comprises rendering the 360-degree video data by keeping the aspect ratio of the preferred regions-of-interest or preferred viewports unchanged and minimizing rendered parts of the 360-degree video data that are not covered by the preferred regions-of-interest or preferred viewports by cropping the preferred regions-of-interest or preferred viewports to fit the aspect ratio of the display.

6. The method of claim 1, wherein the one or more second syntax elements include an indication that the preferred rendering operation includes rendering the preferred regions-of-interest or preferred viewports by keeping an aspect ratio of the preferred regions-of-interest or preferred viewports unchanged and minimizing rendered parts of the 360-degree video data that are not covered by the preferred regions-of-interest or preferred viewports by rendering adjacent regions of the 360-degree video to fit an aspect ratio of a display, and
wherein rendering the 360-degree video data comprises rendering the 360-degree video data by keeping the aspect ratio of the preferred regions-of-interest or preferred viewports unchanged and minimizing rendered parts of the 360-degree video data that are not covered by the preferred regions-of-interest or preferred viewports by rendering adjacent regions of the 360-degree video to fit the aspect ratio of the display.

7. The method of claim 1, wherein the one or more second syntax elements include an indication that the preferred rendering operation includes rendering the preferred regions-of-interest or preferred viewports by keeping an aspect ratio of the preferred regions-of-interest or preferred viewports unchanged and minimizing rendered parts of the 360-degree video data that are not covered by the preferred regions-of-interest or preferred viewports by adding banners to the preferred regions-of-interest or preferred viewports to fit an aspect ratio of a display, and
wherein rendering the 360-degree video data comprises rendering the 360-degree video data by keeping the aspect ratio of the preferred regions-of-interest or preferred viewports unchanged and minimizing rendered parts of the 360-degree video data that are not covered by the preferred regions-of-interest or preferred viewports by adding banners to the preferred regions-of-interest or preferred viewports to fit the aspect ratio of the display.

8. The method of claim 1,
wherein rendering the 360-degree video data comprises rendering the 360-degree video data by modifying the aspect ratio of the preferred regions-of-interest or preferred viewports using non-linear warping techniques to fit the aspect ratio of the display.

9. The method of claim 1, wherein receiving the one or more second syntax elements comprises receiving a preferred_rendering_operation syntax element in an omnidirectional viewport supplemental enhancement information, SEI, message, wherein a value of the preferred rendering operation syntax element indicates one of an unspecified rendering preference, rendering adjacent regions of the preferred regions-of-interest or preferred viewports, adding banners around the preferred regions-of-interest or preferred viewports, or cropping the preferred regions-of-interest or preferred viewports.

10. An apparatus configured to process video data, the apparatus comprising:
a memory configured to store 360-degree video data; and
one or more processors in communication with the memory, the apparatus configured to:
receive (600) 360-degree video data;
receive (602) one or more first syntax elements indicating preferred regions-of-interest or preferred viewports of the 360-degree video data;
receive (604) one or more second syntax elements that indicate a preferred rendering operation for rendering the preferred regions-of-interest or preferred viewports, wherein the preferred rendering operation renders the preferred regions-of-interest based on an aspect ratio of a display or renders the
preferred viewports based on the aspect ratio of the display and **characterised by** the one
or more second syntax elements include an indication that the preferred rendering operation includes rendering the preferred regions-of-interest or
preferred viewports by modifying an aspect ratio of the preferred regions-of-interest or preferred viewports using non-linear warping to fit an aspect ratio of the display; and
render (606) the 360-degree video data based on the preferred rendering operation.

11. The apparatus of claim 10, wherein the one or more processors are further configured to:
decode the received 360-degree video data.

12. The apparatus of claim 10, wherein the one or more second syntax elements include an indication that the preferred rendering operation includes rendering the preferred regions-of-interest or preferred viewports without changing an aspect ratio of the preferred regions-of-interest or preferred viewports, and
wherein the one or more processors are further configured to render the preferred regions-of-interest or preferred viewports without changing the aspect ratio of the preferred regions-of-interest or preferred viewports.

13. A method of processing video data, the method comprising:
encoding (500) 360-degree video data;
generating (502) one or more first syntax elements indicating preferred regions-of-interest or preferred viewports of the 360-degree video data;
generating (504) one or more second syntax elements that indicate a preferred rendering operation for rendering the preferred regions-of-interest or preferred viewports, wherein the preferred rendering operation renders the preferred regions-of-interest based on an aspect ratio of a display or renders the preferred viewports based on the aspect ratio of the display and **characterised by** the one or more second syntax elements include an indication that the preferred rendering operation includes rendering the preferred regions-of-interest or preferred viewports by modifying an aspect ratio of the preferred regions-of-interest or preferred viewports using non-linear warping to fit an aspect ratio of the display; and
signalling (506) the one or more first syntax elements and the one or more second syntax elements with the encoded 360-degree video data.

14. The method of claim 13, wherein the one or more second syntax elements include an indication that the preferred rendering operation includes rendering the preferred regions-of-interest or preferred viewports without changing an aspect ratio of the preferred regions-of-interest or preferred viewports.

15. A non-transitory computer-readable storage medium storing instructions that, when executed, causes one or more processors of a device configured to process video data to execute the method of any one of claims 13 or 14.

## Patentansprüche

1. Verfahren zum Verarbeiten von Videodaten, wobei das Verfahren Folgendes beinhaltet:
Empfangen (600) von 360-Grad-Videodaten;
Empfangen (602) eines oder mehrerer erster Syntaxelemente, die bevorzugte Regionen von Interesse oder bevorzugte Ansichtsfenster der 360-Grad-Videodaten angeben;
Empfangen (604) eines oder mehrerer zweiter Syntaxelemente, die eine bevorzugte Rendering-Operation zum Rendern der bevorzugten Regionen von Interesse oder bevorzugten Ansichtsfenster angeben, wobei die bevorzugte Rendering-Operation die bevorzugten Regionen von Interesse auf der Basis eines Seitenverhältnisses einer Anzeige rendert oder die bevorzugten Ansichtsfenster auf der Basis des Seitenverhältnisses der Anzeige rendert, und **dadurch gekennzeichnet, dass** die ein oder mehreren zweiten Syntaxelemente eine Angabe enthalten, dass die bevorzugte Rendering-Operation das Rendern der bevorzugten Regionen von Interesse oder bevorzugten Ansichtsfenster durch Modifizieren eines Seitenverhältnisses der bevorzugten Regionen von Interesse oder bevorzugten Ansichtsfenster mittels nicht-linearer Verzerrung passend zu einem Seitenverhältnis der Anzeige beinhaltet; und
Rendern (606) der 360-Grad-Videodaten auf der Basis der bevorzugten Rendering-Operation.

2. Verfahren nach Anspruch 1, das ferner Folgendes beinhaltet:
Decodieren der empfangenen 360-Grad-Videodaten.

3. Verfahren nach Anspruch 1, wobei die ein oder mehreren zweiten Syntaxelemente eine Angabe enthalten, dass die bevorzugte Rendering-Operation das Rendern der bevorzugten Regionen von Interesse oder bevorzugten Ansichtsfenster ohne Änderung eines Seitenverhältnisses der bevorzugten Regionen von Interesse oder bevorzugten Ansichtsfenster beinhaltet, und
wobei das Rendern der 360-Grad-Videodaten das Rendern der bevorzugten Regionen von Interesse oder bevorzugten Ansichtsfenster ohne Änderung des Seitenverhältnisses der bevorzugten Regionen von Interesse oder bevorzugten Ansichtsfenster beinhaltet.

4. Verfahren nach Anspruch 1, wobei die ein oder mehreren zweiten Syntaxelemente eine Angabe enthalten, dass die bevorzugte Rendering-Operation das Rendern der bevorzugten Regionen von Interesse oder bevorzugten Ansichtsfenster durch Minimieren gerenderter Teile der 360-Grad-Videodaten beinhaltet, die nicht von den bevorzugten Regionen von Interesse oder bevorzugten Ansichtsfenstern abgedeckt werden, und
wobei das Rendern der 360-Grad-Videodaten das Rendern der bevorzugten Regionen von Interesse oder bevorzugten Ansichtsfenster durch Minimieren gerenderter Teile der 360-Grad-Videodaten beinhaltet, die nicht von den bevorzugten Regionen von Interesse oder bevorzugten Ansichtsfenstern abgedeckt werden.

5. Verfahren nach Anspruch 1, wobei die ein oder mehreren zweiten Syntaxelemente eine Angabe enthalten, dass die bevorzugte Rendering-Operation das Rendern der bevorzugten Regionen von Interesse oder bevorzugten Ansichtsfenster durch Unveränderthalten eines Seitenverhältnisses der bevorzugten Regionen von Interesse oder bevorzugten Ansichtsfenster und Minimieren gerenderter Teile der 360-Grad-Videodaten, die nicht von den bevorzugten Regionen von Interesse oder bevorzugten Ansichtsfenstern abgedeckt werden, durch Beschneiden der bevorzugten Regionen von Interesse oder bevorzugten Ansichtsfenster passend zu einem Seitenverhältnis der Anzeige beinhaltet, und
wobei das Rendern der 360-Grad-Videodaten das Rendern der 360-Grad-Videodaten durch Unveränderthalten des Seitenverhältnisses der bevorzugten Regionen von Interesse oder bevorzugten Ansichtsfenster und Minimieren gerenderter Teile der 360-Grad-Videodaten, die nicht von den bevorzugten Regionen von Interesse oder bevorzugten Ansichtsfenstern abgedeckt werden, durch Beschneiden der bevorzugten Regionen von Interesse oder bevorzugten Ansichtsfenster passend zu einem Seitenverhältnis der Anzeige beinhaltet.

6. Verfahren nach Anspruch 1, wobei die ein oder mehreren zweiten Syntaxelemente eine Angabe enthalten, dass die bevorzugte Rendering-Operation das Rendern der bevorzugten Regionen von Interesse oder bevorzugten Ansichtsfenster durch Unveränderthalten eines Seitenverhältnisses der bevorzugten Regionen von Interesse oder bevorzugten Ansichtsfenster und Minimieren gerenderter Teile der 360-Grad-Videodaten, die nicht von den bevorzugten Regionen von Interesse oder bevorzugten Ansichtsfenstern abgedeckt werden, durch Rendern benachbarter Regionen des 360-Grad-Videos passend zu einem Seitenverhältnis einer Anzeige beinhaltet, und
wobei das Rendern der 360-Grad-Videodaten das Rendern der 360-Grad-Videodaten durch Unveränderthalten des Seitenverhältnisses der bevorzugten Regionen von Interesse oder bevorzugten Ansichtsfenster und Minimieren gerenderter Teile der 360-Grad-Videodaten, die nicht von den bevorzugten Regionen von Interesse oder bevorzugten Ansichtsfenstern abgedeckt werden, durch Rendern benachbarter Regionen des 360-Grad-Videos passend zum Seitenverhältnis der Anzeige beinhaltet.

7. Verfahren nach Anspruch 1, wobei die ein oder mehreren zweiten Syntaxelemente eine Angabe enthalten, dass die bevorzugte Rendering-Operation das Rendern der bevorzugten Regionen von Interesse oder bevorzugten Ansichtsfenster durch Unveränderthalten eines Seitenverhältnisses der bevorzugten Regionen von Interesse oder bevorzugten Ansichtsfenster und Minimieren gerenderter Teile der 360-Grad-Videodaten, die nicht von den bevorzugten Regionen von Interesse oder bevorzugten Ansichtsfenstern abgedeckt werden, durch Hinzufügen von Bannern zu den bevorzugten Regionen von Interesse oder bevorzugten Ansichtsfenstern passend zu einem Seitenverhältnis einer Anzeige beinhaltet, und
wobei das Rendern der 360-Grad-Videodaten das Rendern der 360-Grad-Videodaten durch Unveränderthalten des Seitenverhältnisses der bevorzugten Regionen von Interesse oder bevorzugten Ansichtsfenster und Minimieren gerenderter Teile der 360-Grad-Videodaten, die nicht von den bevorzugten Regionen von Interesse oder Ansichtsfenstern abgedeckt werden, durch Hinzufügen von Bannern zu den bevorzugten Regionen von Interesse oder bevorzugten Ansichtsfenstern passend zum Seitenverhältnis der Anzeige beinhaltet.

8. Verfahren nach Anspruch 1,
wobei das Rendern der 360-Grad-Videodaten das Rendern der 360-Grad-Videodaten durch Modifizieren des Seitenverhältnisses der bevorzugten Regionen von Interesse oder bevorzugten Ansichtsfenster mittels nichtlinearer Verzerrungstechniken passend zum Seitenverhältnis der Anzeige beinhaltet.

9. Verfahren nach Anspruch 1, wobei das Empfangen der ein oder mehreren zweiten Syntaxelemente das Empfangen eines preferred_rendering_operation-Syntaxelements in einer omnidirektionalen Ansichtsfenster-SEI-(Supplemental Enhancement Information)-Nachricht beinhaltet, wobei ein Wert des preferred_rendering_operation-Syntaxelements eines von einer nicht spezifizierten Rendering-Präferenz, dem Rendern benachbarter Regionen der bevorzugten Regionen von Interesse oder bevorzugten Ansichtsfenster, dem Hinzufügen von Bannern um die bevorzugten Regionen von Interesse oder bevorzugten Ansichtsfenster oder dem Beschneiden der bevorzugten Regionen von Interesse oder bevorzugten Ansichtsfenster angibt.

10. Vorrichtung, konfiguriert zum Verarbeiten von Videodaten, wobei die Vorrichtung Folgendes umfasst:
einen Speicher, konfiguriert zum Speichern von 360-Grad-Videodaten; und
einen oder mehrere Prozessoren in Kommunikation mit dem Speicher, wobei die Vorrichtung konfiguriert ist zum:
Empfangen (600) von 360-Grad-Videodaten;
Empfangen (602) von einem oder mehreren ersten Syntaxelementen, die bevorzugte Regionen von Interesse oder bevorzugte Ansichtfenster der 360-Grad-Videodaten angeben;
Empfangen (604) von einem oder mehreren zweiten Syntaxelementen, die eine bevorzugte Rendering-Operation zum Rendern der bevorzugten Regionen von Interesse oder bevorzugten Ansichtsfenster angeben, wobei die bevorzugte Rendering-Operation die bevorzugten Regionen von Interesse auf der Basis eines Seitenverhältnisses einer Anzeige rendert oder die bevorzugten Ansichtsfenster auf der Basis des Seitenverhältnisses der Anzeige rendert, und **dadurch gekennzeichnet, dass** die ein oder mehreren zweiten Syntaxelemente eine Angabe enthalten, dass die bevorzugte Rendering-Operation das Rendern der bevorzugten Regionen von Interesse oder bevorzugten Ansichtsfenster durch Modifizieren eines Seitenverhältnisses der bevorzugten Regionen von Interesse oder bevorzugten Ansichtsfenster mittels nicht-linearer Verzerrung passend zu einem Seitenverhältnis der Anzeige beinhaltet; und
Rendern (606) der 360-Grad-Videodaten auf der Basis der bevorzugten Rendering-Operation.

11. Vorrichtung nach Anspruch 10, wobei die ein oder mehreren Prozessoren ferner konfiguriert sind zum:
Decodieren der empfangenen 360-Grad-Videodaten.

12. Vorrichtung nach Anspruch 10, wobei die ein oder mehreren zweiten Syntaxelemente eine Angabe enthalten, dass die bevorzugte Rendering-Operation das Rendern der bevorzugten Regionen von Interesse oder bevorzugten Ansichtsfenster ohne Änderung eines Seitenverhältnisses der bevorzugten Regionen von Interesse oder bevorzugten Ansichtsfenster beinhaltet, und
wobei die ein oder mehreren Prozessoren ferner zum Rendern der bevorzugten Regionen von Interesse oder bevorzugten Ansichtsfenster ohne Änderung des Seitenverhältnisses der bevorzugten Regionen von Interesse oder bevorzugten Ansichtsfenster konfiguriert sind.

13. Verfahren zum Verarbeiten von Videodaten, wobei das Verfahren Folgendes beinhaltet:
Encodieren (500) von 360-Grad-Videodaten;
Erzeugen (502) von einem oder mehreren ersten Syntaxelementen, die bevorzugte Regionen von Interesse oder bevorzugte Ansichtsfenster der 360-Grad-Videodaten angeben;
Erzeugen (504) von einem oder mehreren zweiten Syntaxelementen, die eine bevorzugte Rendering-Operation zum Rendern der bevorzugten Regionen von Interesse oder bevorzugten Ansichtsfenster angeben, wobei die bevorzugte Rendering-Operation die bevorzugten Regionen von Interesse auf der Basis eines Seitenverhältnisses einer Anzeige rendert oder die bevorzugten Ansichtsfenster auf der Basis des Seitenverhältnisses der Anzeige rendert, und **dadurch gekennzeichnet, dass** die ein oder mehreren zweiten Syntaxelemente eine Angabe enthalten, dass die bevorzugte Rendering-Operation das Rendern der bevorzugten Regionen von Interesse oder bevorzugten Ansichtsfenster durch Modifizieren eines Seitenverhältnisses der bevorzugten Regionen von Interesse oder bevorzugten Ansichtsfenster mittels nicht-linearer Verzerrung passend zu einem Seitenverhältnis der Anzeige beinhaltet; und
Signalisieren (506) der ein oder mehreren ersten Syntaxelemente und der ein oder mehreren zweiten Syntaxelemente mit den encodierten 360-Grad-Videodaten.

14. Verfahren nach Anspruch 13, wobei die ein oder mehreren zweiten Syntaxelemente eine Angabe enthalten, dass die bevorzugte Rendering-Operation das Rendern der bevorzugten Regionen von Interesse oder bevorzugten Ansichtsfenster ohne Änderung eines Seitenverhältnisses der bevorzugten Regionen von Interesse oder bevorzugten Ansichtsfenster beinhaltet.

15. Nichtflüchtiges computerlesbares Speichermedium, das Befehle speichert, die bei Ausführung bewirken, dass ein oder mehrere Prozessoren eines zur Verarbeitung von Videodaten konfigurierten Geräts das Verfahren nach einem der Ansprüche 13 oder 14 durchführen.

## Revendications

1. Procédé de traitement de données vidéo, le procédé comprenant :
la réception (600) de données vidéo à 360 degrés ;
la réception (602) d'un ou plusieurs premiers éléments de syntaxe indiquant des régions d'intérêt préférées ou des fenêtres d'affichage préférées des données vidéo à 360 degrés ;
la réception (604) d'un ou plusieurs deuxièmes éléments de syntaxe qui indiquent une opération de rendu préférée pour rendre les régions d'intérêt préférées ou les fenêtres d'affichage préférées, dans lequel l'opération de rendu préférée rend les régions d'intérêt préférées en fonction d'un rapport hauteur/largeur d'un afficheur ou rend les fenêtres d'affichage préférées en fonction du rapport hauteur/largeur de l'afficheur et **caractérisé en ce que** les un ou plusieurs deuxièmes éléments de syntaxe comportent une indication que l'opération de rendu préférée comporte un rendu des régions d'intérêt préférées ou des fenêtres d'affichage préférées en modifiant un rapport hauteur/largeur des régions d'intérêt préférées ou des fenêtres d'affichage préférées à l'aide d'une déformation non linéaire pour les adapter à un rapport hauteur/largeur de l'afficheur ; et
le rendu (606) des données vidéo à 360 degrés en fonction de l'opération de rendu préférée.

2. Procédé selon la revendication 1, comprenant en outre :
le décodage des données vidéo à 360 degrés reçues.

3. Procédé selon la revendication 1, dans lequel les un ou plusieurs deuxièmes éléments de syntaxe comportent une indication que l'opération de rendu préférée comporte le rendu des régions d'intérêt préférées ou des fenêtres d'affichage préférées sans modifier un rapport hauteur/largeur des régions d'intérêt préférées ou des fenêtres d'affichage préférées, et
dans lequel le rendu des données vidéo à 360 degrés rend les régions d'intérêt préférées ou les fenêtres d'affichage préférées sans modifier le rapport hauteur/largeur des régions d'intérêt préférées ou des fenêtres d'affichage préférées.

4. Procédé selon la revendication 1, dans lequel les un ou plusieurs deuxièmes éléments de syntaxe comportent une indication que l'opération de rendu préférée comporte le rendu des régions d'intérêt préférées ou des fenêtres d'affichage préférées en minimisant des parties rendues des données vidéo à 360 degrés qui ne sont pas couvertes par les régions d'intérêt préférées ou les fenêtres d'affichage préférées, et
dans lequel le rendu des données vidéo à 360 degrés comprend le rendu des régions d'intérêt préférées ou des fenêtres d'affichage préférées en minimisant des parties rendues des données vidéo à 360 degrés qui ne sont pas couvertes par les régions d'intérêt préférées ou les fenêtres d'affichage préférées.

5. Procédé selon la revendication 1, dans lequel les un ou plusieurs deuxièmes éléments de syntaxe comportent une indication que l'opération de rendu préférée comporte le rendu des régions d'intérêt préférées ou des fenêtres d'affichage préférées en maintenant inchangé un rapport hauteur/largeur des régions d'intérêt préférées ou des fenêtres d'affichage préférées et en minimisant des parties rendues des données vidéo à 360 degrés qui ne sont pas couvertes par les zones d'intérêt préférées ou les fenêtres d'affichage préférées en rognant les régions d'intérêt préférées ou les fenêtres d'affichage préférées pour les adapter à un rapport hauteur/largeur d'un afficheur, et
dans lequel le rendu des données vidéo à 360 degrés comprend le rendu des données vidéo à 360 degrés en maintenant inchangé le rapport hauteur/largeur des régions d'intérêt préférées ou des fenêtres d'affichage préférées et en minimisant des parties rendues des données vidéo à 360 degrés qui ne sont pas couvertes par les régions d'intérêt préférées ou les fenêtres d'affichage préférées en rognant les régions d'intérêt préférées ou les fenêtres d'affichage préférées pour les adapter au rapport hauteur/largeur de l'afficheur.

6. Procédé selon la revendication 1, dans lequel les un ou plusieurs deuxièmes éléments de syntaxe comportent une indication que l'opération de rendu préférée comporte le rendu des régions d'intérêt préférées ou des fenêtres d'affichage préférées en maintenant inchangé un rapport hauteur/largeur des régions d'intérêt préférées ou des fenêtres d'affichage préférées et en minimisant des parties rendues des données vidéo à 360 degrés qui ne sont pas couvertes par les régions d'intérêt préférées ou les fenêtres d'affichage préférées en rendant des régions adjacentes de la vidéo à 360 degrés pour les adapter à un rapport hauteur/largeur d'un afficheur, et
dans lequel le rendu des données vidéo à 360 degrés comprend le rendu des données vidéo à 360 degrés en maintenant inchangé le rapport hauteur/largeur des régions d'intérêt préférées ou des fenêtres d'affichage préférées et en minimisant des parties rendues des données vidéo à 360 degrés qui ne sont pas couvertes par les régions d'intérêt préférées ou les fenêtres d'affichage préférées en rendant des régions adjacentes de la vidéo à 360 degrés pour les adapter au rapport hauteur/largeur de l'afficheur.

7. Procédé selon la revendication 1, dans lequel les un ou plusieurs deuxièmes éléments de syntaxe comportent une indication que l'opération de rendu préférée comporte le rendu des régions d'intérêt préférées ou des fenêtres d'affichage préférées en maintenant inchangé un rapport hauteur/largeur des régions d'intérêt préférées ou des fenêtres d'affichage préférées et en minimisant des parties rendues des données vidéo à 360 degrés qui ne sont pas couvertes par les régions d'intérêt préférées ou les fenêtres d'affichage préférées en ajoutant des bannières aux régions d'intérêt préférées ou aux fenêtres d'affichage préférées pour les adapter à un rapport hauteur/largeur d'un afficheur, et
dans lequel le rendu des données vidéo à 360 degrés comprend le rendu des données vidéo à 360 degrés en maintenant inchangé le rapport hauteur/largeur des régions d'intérêt préférées ou des fenêtres d'affichage préférées et en minimisant des parties rendues des données vidéo à 360 degrés qui ne sont pas couvertes par les régions d'intérêt préférées ou les fenêtres d'affichage préférées en ajoutant des bannières aux régions d'intérêt préférées ou aux fenêtres d'affichage préférées pour qu'elles concordent au rapport hauteur/largeur de l'afficheur.

8. Procédé selon la revendication 1,
dans lequel le rendu des données vidéo à 360 degrés comprend le rendu des données vidéo à 360 degrés en modifiant le rapport hauteur/largeur des régions d'intérêt préférées ou des fenêtres d'affichage préférées au moyen de techniques de déformation non linéaires pour les adapter au rapport hauteur/largeur de l'afficheur.

9. Procédé selon la revendication 1, dans lequel la réception des un ou plusieurs deuxièmes éléments de syntaxe comprend la réception d'un élément de syntaxe d'opération de rendu préférée dans un message d'informations d'amélioration supplémentaires, SEI, de fenêtre d'affichage omnidirectionnelle, dans lequel une valeur de l'élément de syntaxe d'opération de rendu préférée indique une préférence de rendu non spécifiée, un rendu de régions adjacentes des régions d'intérêt préférées ou des fenêtres d'affichage préférées, un ajout de bannières autour des régions d'intérêt préférées ou des fenêtres préférées, ou un rognage des régions d'intérêt préférées ou des fenêtres d'affichage préférées.

10. Appareil configuré pour traiter des données vidéo, l'appareil comprenant :
une mémoire configurée pour stocker des données vidéo à 360 degrés ; et
un ou plusieurs processeurs en communication avec la mémoire, l'appareil étant configuré pour :
recevoir (600) des données vidéo à 360 degrés ;
recevoir (602) un ou plusieurs premiers éléments de syntaxe indiquant des régions d'intérêt préférées ou des fenêtres d'affichage préférées des données vidéo à 360 degrés ;
recevoir (604) un ou plusieurs deuxièmes éléments de syntaxe qui indiquent une opération de rendu préférée pour le rendu des régions d'intérêt préférées ou des fenêtres d'affichage préférées, dans lequel l'opération de rendu préférée rend les régions d'intérêt préférées en fonction d'un rapport hauteur/largeur d'un afficheur ou rend les fenêtres d'affichage préférées en fonction du rapport hauteur/largeur de l'afficheur et **caractérisé en ce que** les un ou plusieurs deuxièmes éléments de syntaxe comportent une indication que l'opération de rendu préférée comporte le rendu des régions d'intérêt préférées ou des fenêtres d'affichage préférées en modifiant un rapport hauteur/largeur des régions d'intérêt préférées ou des fenêtres d'affichage préférées à l'aide d'une déformation non linéaire pour les adapter à un rapport hauteur/largeur de l'afficheur; et
rendre (606) les données vidéo à 360 degrés en fonction de l'opération de rendu préférée.

11. Appareil selon la revendication 10, dans lequel les un ou plusieurs processeurs sont configurés en outre pour :
décoder les données vidéo à 360 degrés reçues.

12. Dispositif selon la revendication 10, dans lequel les un ou plusieurs deuxièmes éléments de syntaxe comportent une indication que l'opération de rendu préférée comporte le rendu des régions d'intérêt préférées ou des fenêtres d'affichage préférées sans modifier un rapport hauteur/largeur des régions d'intérêt préférées ou des fenêtres d'affichage préférées, et
dans lequel les un ou plusieurs processeurs sont configurés pour rendre les régions d'intérêt préférées ou les fenêtres d'affichage préférées sans modifier le rapport hauteur/largeur des régions d'intérêt préférées ou des fenêtres d'affichage préférées.

13. Procédé de traitement de données vidéo, le procédé comprenant :
le codage (500) de données vidéo à 360 degrés ;
la génération (502) d'un ou plusieurs premiers éléments de syntaxe indiquant des régions d'intérêt préférées ou des fenêtres d'affichage préférées des données vidéo à 360 degrés ;
la génération (504) d'un ou plusieurs deuxièmes éléments de syntaxe qui indiquent une opération de rendu préférée pour le rendu des régions d'intérêt préférées ou des fenêtres d'affichage préférées, dans lequel l'opération de rendu préférée rend les régions d'intérêt préférées en fonction d'un rapport hauteur/largeur d'un afficheur ou rend les fenêtres d'affichage préférées en fonction du rapport hauteur/largeur de l'afficheur et **caractérisé en ce que** les un ou plusieurs deuxièmes éléments de syntaxe comportent une indication que l'opération de rendu préférée comprend le rendu des régions d'intérêt préférées ou des fenêtres d'affichage préférées en modifiant un rapport hauteur/largeur des régions d'intérêt préférées ou des fenêtres d'affichage préférées à l'aide d'une déformation non linéaire pour les adapter à un rapport hauteur/largeur de l'afficheur ; et
la signalisation (506) des un ou plusieurs premiers éléments de syntaxe et des un ou plusieurs deuxièmes éléments de syntaxe avec les données vidéo codées à 360 degrés.

14. Procédé selon la revendication 13, dans lequel les un ou plusieurs deuxièmes éléments de syntaxe comportent une indication que l'opération de rendu préférée comporte le rendu des régions d'intérêt préférées ou des fenêtres d'affichage préférées sans modifier le rapport hauteur/largeur des régions d'intérêt préférées ou des fenêtres d'affichage préférées.

15. Support de stockage non transitoire lisible par ordinateur stockant des instructions qui, à leur exécution, amènent un ou plusieurs processeurs d'un dispositif configuré pour traiter des données vidéo à exécuter le procédé selon l'une quelconque des revendications 13 ou 14.
